(19) Europäisches Patentamt
European Patent Office
Office européen des brevets

(11) **EP 4 415 240 A2**

(12) **EUROPEAN PATENT APPLICATION**

(43) Date of publication:
**14.08.2024 Bulletin 2024/33**

(21) Application number: **24305879.9**

(22) Date of filing: **04.06.2024**

(51) International Patent Classification (IPC):
**H02M 1/32** *(2007.01)*    **H02M 7/49** *(2007.01)*
**H02M 7/5387** *(2007.01)*    **H02M 7/5395** *(2006.01)*

(52) Cooperative Patent Classification (CPC):
**H02M 1/325; H02M 7/49; H02M 7/53876; H02M 7/5395**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicants:
• **NXP B.V.**
**5656 AG Eindhoven (NL)**
• **Centre National de la Recherche Scientifique**
**75794 Paris (FR)**
• **Universite de Toulouse III - Paul Sabatier**
**31062 Toulouse Cedex 9 (FR)**

• **Institut National Polytechnique de Toulouse**
**31029 Toulouse (FR)**

(72) Inventors:
• **Galvis Castellanos, Daniel**
**31023 Toulouse Cedex 1 (FR)**
• **Gateau, Guillaume**
**31029 Toulouse Cedex 4 (FR)**

(74) Representative: **Schmütz, Christian Klaus Johannes**
**NXP Semiconductors Germany GmbH**
**Intellectual Property Group**
**Beiersdorfstr. 12**
**22529 Hamburg (DE)**

(54) **SELF-RECONFIGURABLE MULTILEVEL SV-PWM MODULATOR FOR A CASCADED MULTILEVEL CONVERTER OF A POWER INVERTER**

(57) A self-configurable modulator and method of modulation that reconfigures PWM drive signals provided to a cascaded multilevel converter in response to fault information indicating failure of any of multiple submodules of multiple phases of the cascaded multilevel converter. The modulator includes a reference voltage limiter configured to limit amplitudes of reference voltages based on the fault information, a zero-sequence voltage adjuster configured to calculate at least one zero-sequence voltage from the fault information and to add each zero-sequence voltage to each of multiple modulating signals of the phases to provide adjusted modulating signals, and a carrier signal comparator configured to realign carrier signals based on the fault information and to compare the realigned carrier signals with the adjusted modulating signals to provide reconfigured PWM drive signals.

FIG. 1

**EP 4 415 240 A2**

## Description

BACKGROUND

FIELD

The present disclosure relates in general to power inverters, and more particularly to a system and method of providing a self-reconfigurable multilevel space vector pulse-width modulation (SV-PWM) modulator for a cascaded multilevel converter of a power inverter.

DESCRIPTION OF THE RELATED ART

A power inverter includes a modulator that synthesizes three-phase reference voltages and corresponding carrier signals to generate the control signals for controlling the switches of a converter for driving a load, such as, for example, a three-phase motor or the like. In many applications for driving a three phase machine, such as electric vehicles (EV) or other commercial or industrial electrical systems and the like, the modulator modulates according to the space vector pulse-width modulation (SV-PWM) technique for generating corresponding PWM control signals.

The power inverter may suffer one or more faults, such as failure of one or more submodules within the converter. Depending upon the fault mode, such as the number and relative location of failures, the power inverter may be reconfigured to maintain continued operation at a reduced power level. Most power converters are configured to operate in a balanced manner among the phases. As an example, if one submodule in one phase circuit fails, it is possible to bypass one healthy submodule in each of the other phases, which is not an ideal solution since healthy submodules are no longer used. Another conventional method is referred to as Neutral Point Shift (NPS) in which the angular difference between each of the phases is recalculated to re-equilibrate the system. Conventional methods of rebalancing, which may include the application of NPS, often require complicated recalculation on the fly and do not provide solutions for many fault modes.

BRIEF DESCRIPTION OF THE DRAWINGS

Embodiments of the present invention are illustrated by way of example and are not limited by the accompanying figures. Similar references in the figures may indicate similar elements. Elements in the figures are illustrated for simplicity and clarity and have not necessarily been drawn to scale.

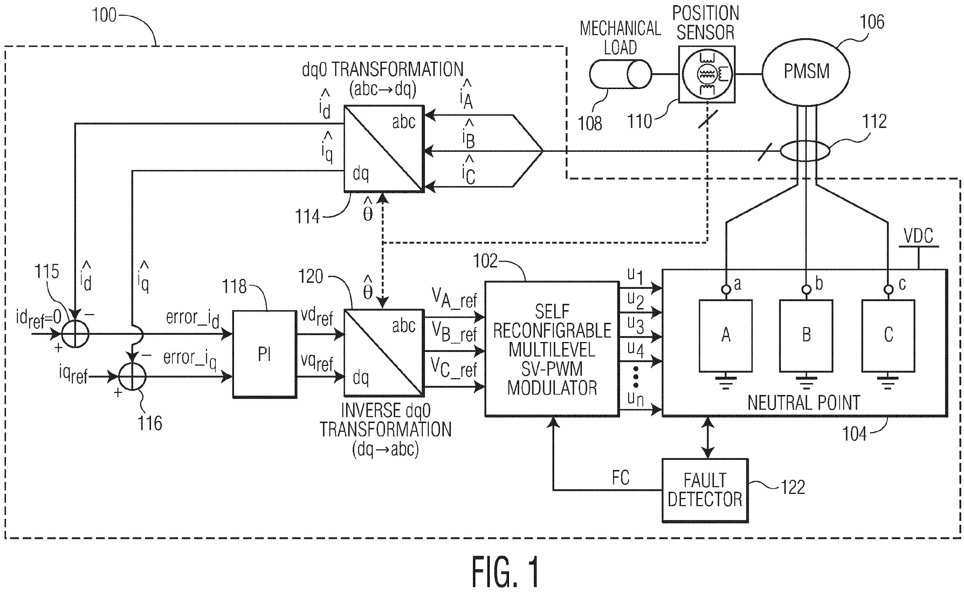

FIG. 1 is a simplified block diagram of a power inverter including a self-reconfigurable multilevel space vector pulse-width modulation (SV-PWM) modulator and a cascaded multilevel converter.

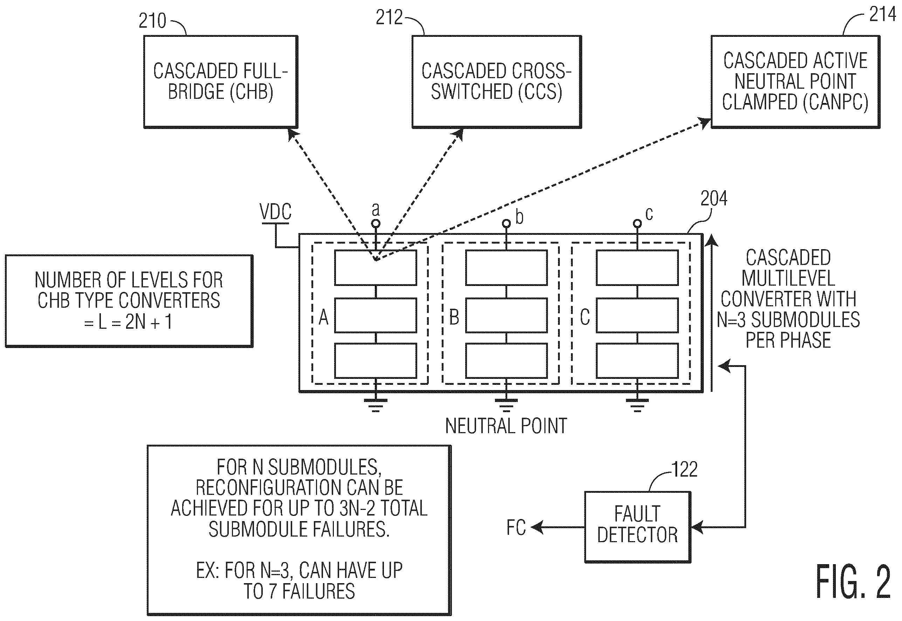

FIG. 2 is a simplified block diagram of a cascaded multilevel converter implemented according to one embodiment which may be used as the converter of FIG. 1.

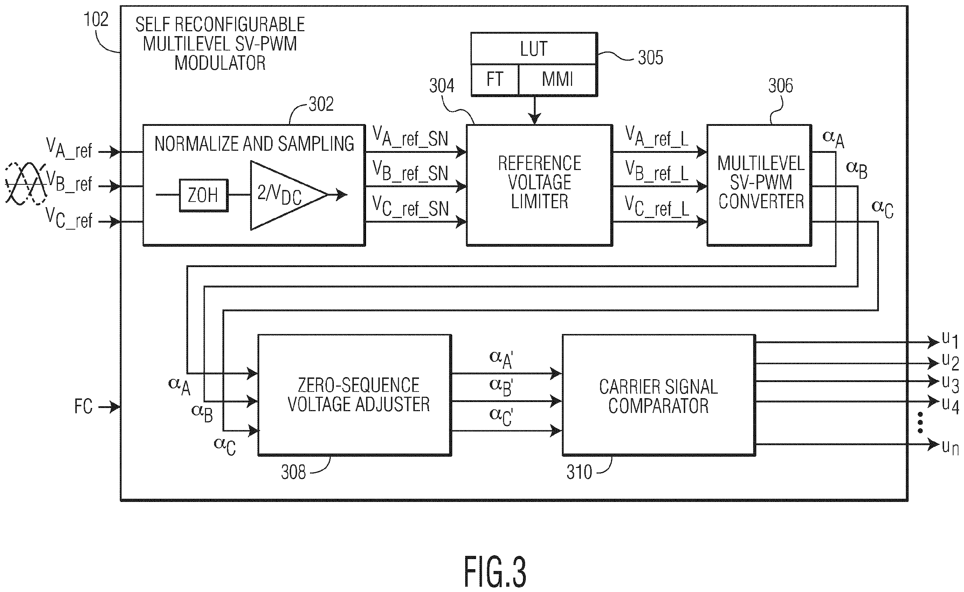

FIG. 3 is a simplified block diagram of the self-reconfigurable multilevel SV-PWM modulator of FIG. 1 implemented according to one embodiment.

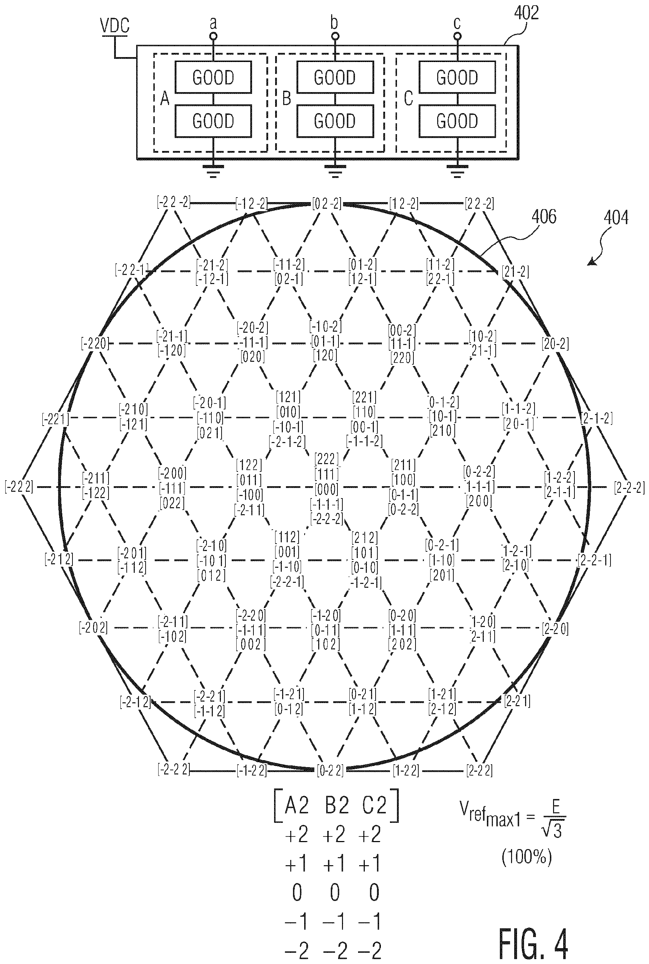

FIG. 4 is a simplified block diagram of a converter with a submodule configuration of N = 2 including 2 CHB submodules per phase and a corresponding space-vector diagram including each of the possible phase state combinations according to one embodiment.

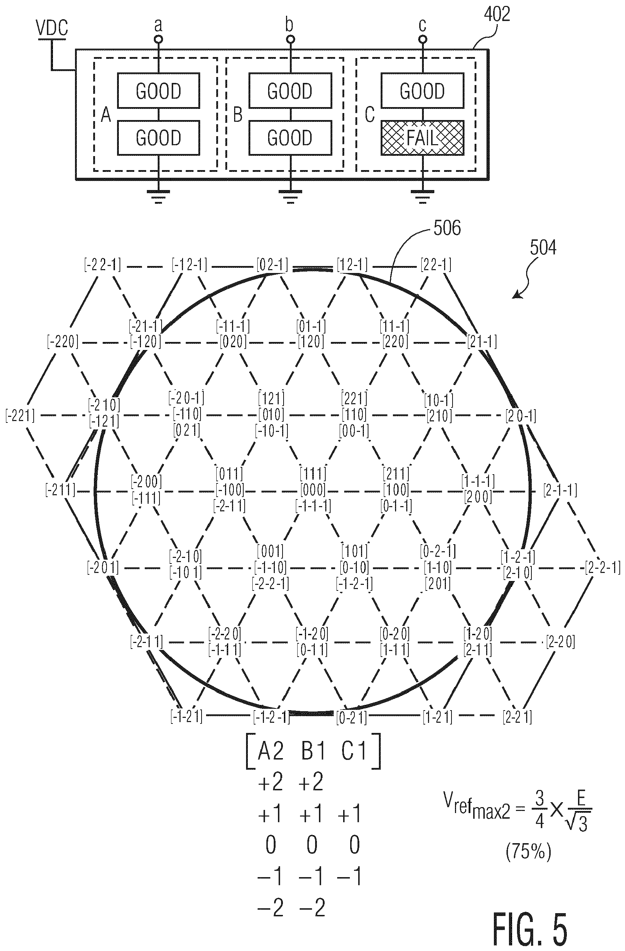

FIG. 5 is a simplified block diagram of the converter of FIG. 4 with the same submodule configuration but with one failed submodule in phase C, and a corresponding space-vector diagram including each of the possible phase state combinations of the converter with the faulty submodule according to one embodiment.

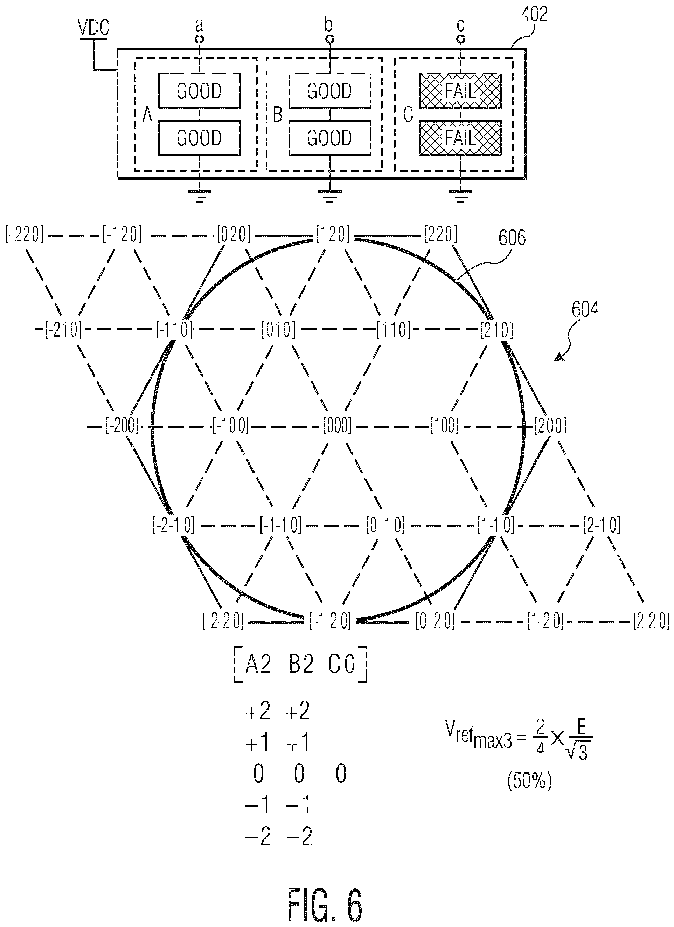

FIG. 6 is a simplified block diagram of the converter of FIG. 4 with the same submodule configuration but with two failed submodules in phase C, and a corresponding space-vector diagram including each of the possible phase state combinations of the converter with the two failed submodules according to one embodiment.

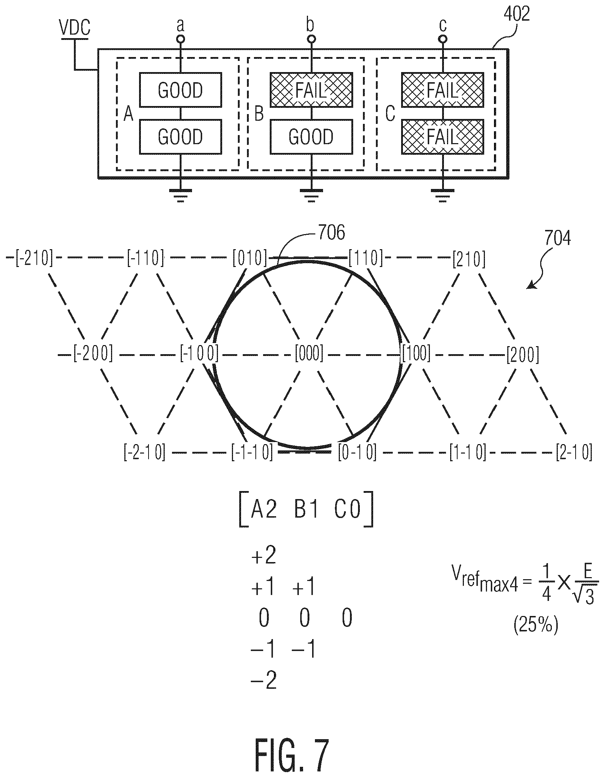

FIG. 7 is a simplified block diagram of the converter of FIG. 4 with the same submodule configuration but with two failed submodules of phase C and one failed submodule in phase B, and a corresponding space-vector diagram including each of the possible phase state combinations of the converter with the three failed submodules according to one embodiment.

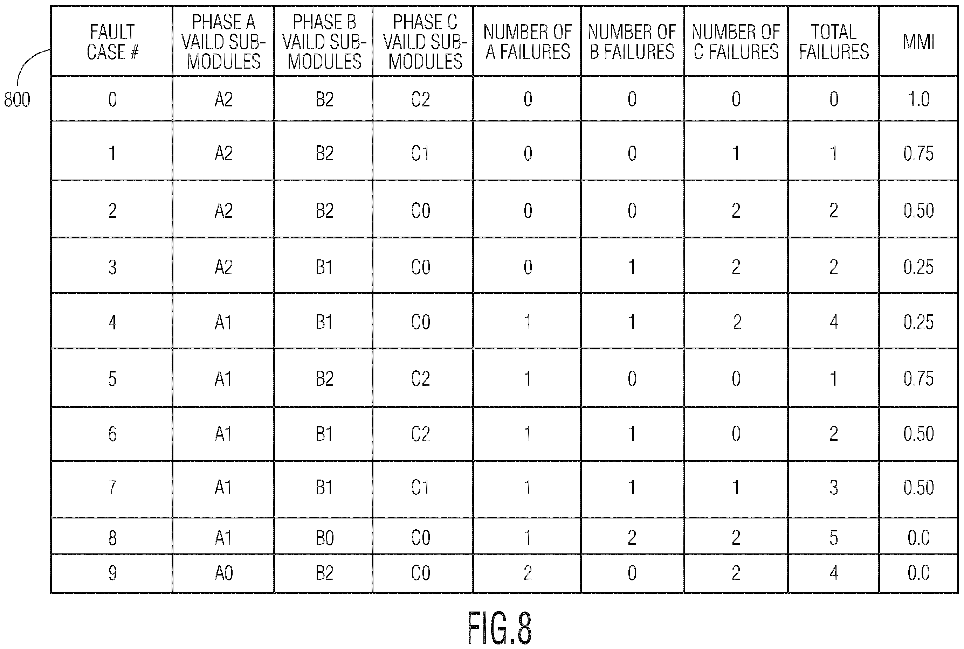

FIG. 8 shows a table that lists a maximal modulation index for each of several different fault cases for the converter of FIG. 4 with a submodule configuration of N = 2 with 2 CHB submodules per phase according to one embodiment.

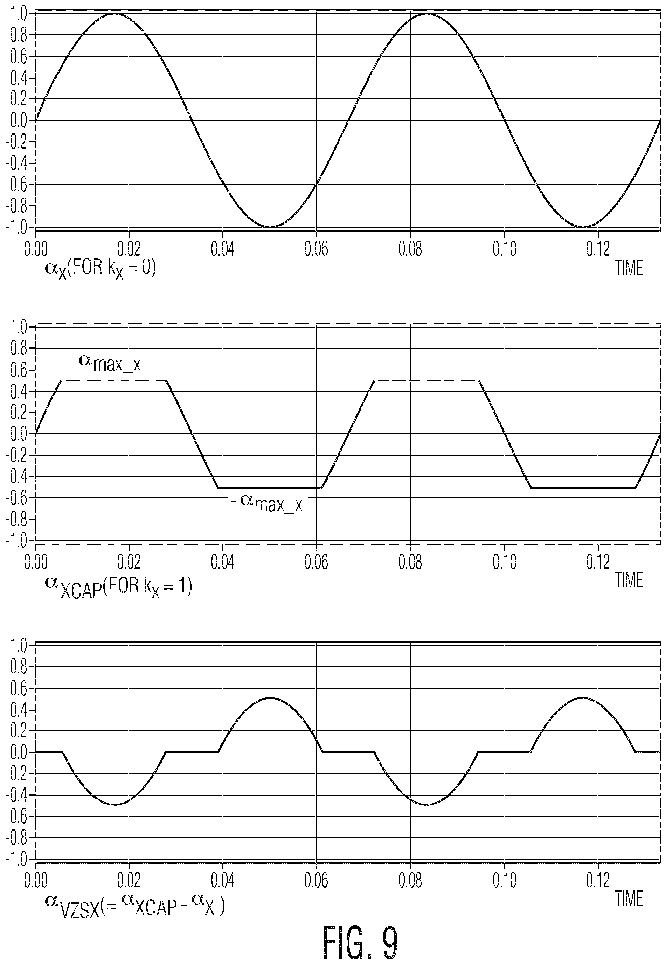

FIG. 9 is a series of timing diagrams illustrating the determination of a zero-sequence voltage in the event of loss of a submodule of a phase of a level 5 converter (N = 2) according to one embodiment.

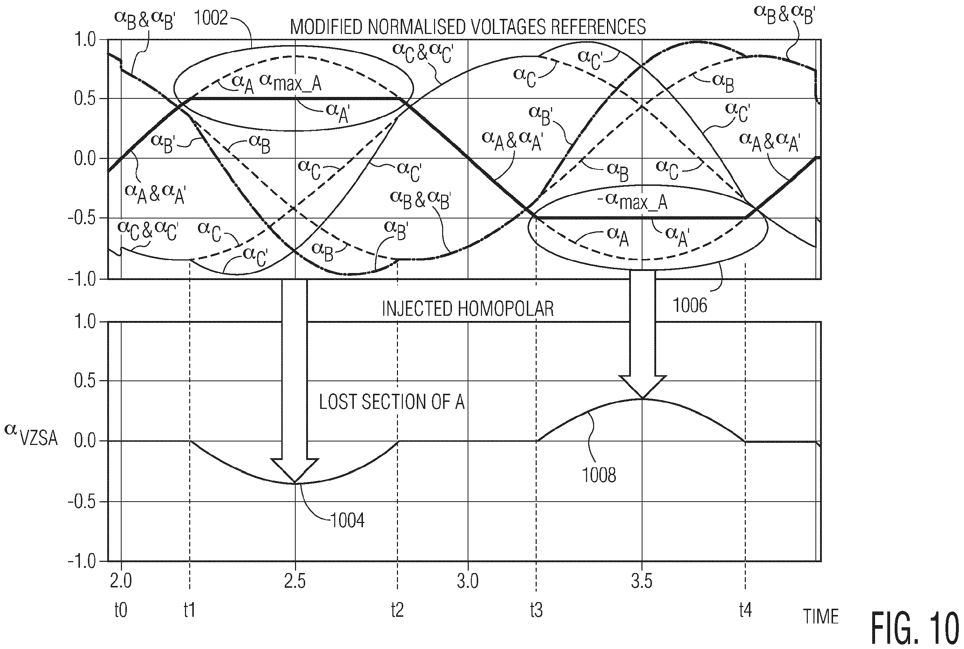

FIG. 10 is a pair of timing diagrams illustrating the determination of a zero-sequence voltage $\alpha_{VZSA}$ in the event of loss of a submodule of phase A of a level 5 converter (N = 2) and corresponding determination of adjusted modulating signals $\alpha_A{}'$, $\alpha_B{}'$, and $\alpha_C{}'$ based on the modulating signals $\alpha_A$, $\alpha_B$, and ac for phases A, B, and C, respectively, according to one embodiment.

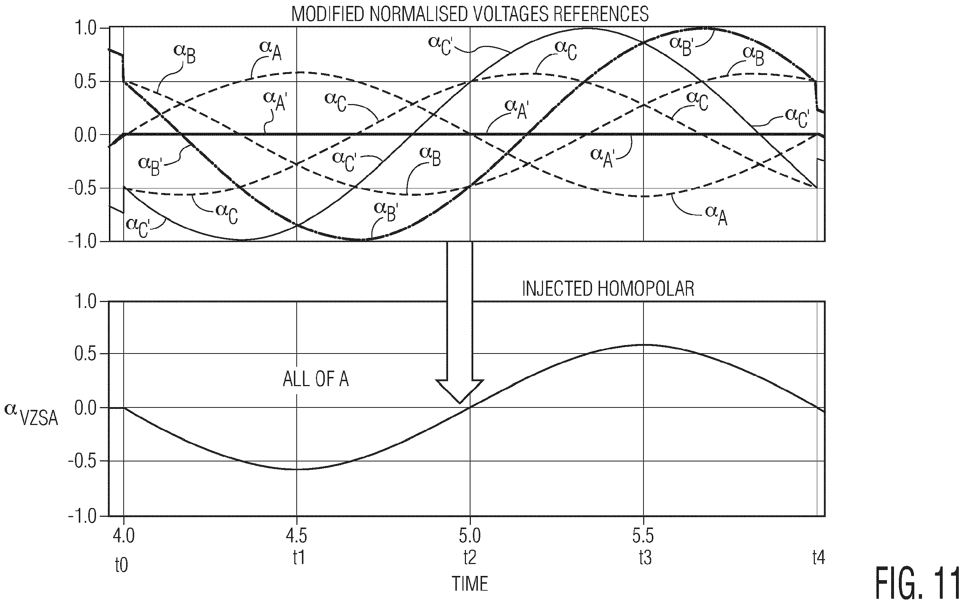

FIG. 11 is a pair of timing diagrams illustrating determining a zero-sequence voltage $\alpha_{VZSA}$ in the event of loss of both submodules of phase A of a level 5 converter (N = 2) and corresponding determination of adjusted modulating signals $\alpha_A'$, $\alpha_B'$, and ac' based on the normal modulating signals $\alpha_A$, $\alpha_B$, and ac for phases A, B, and C, respectively, according to one embodiment.

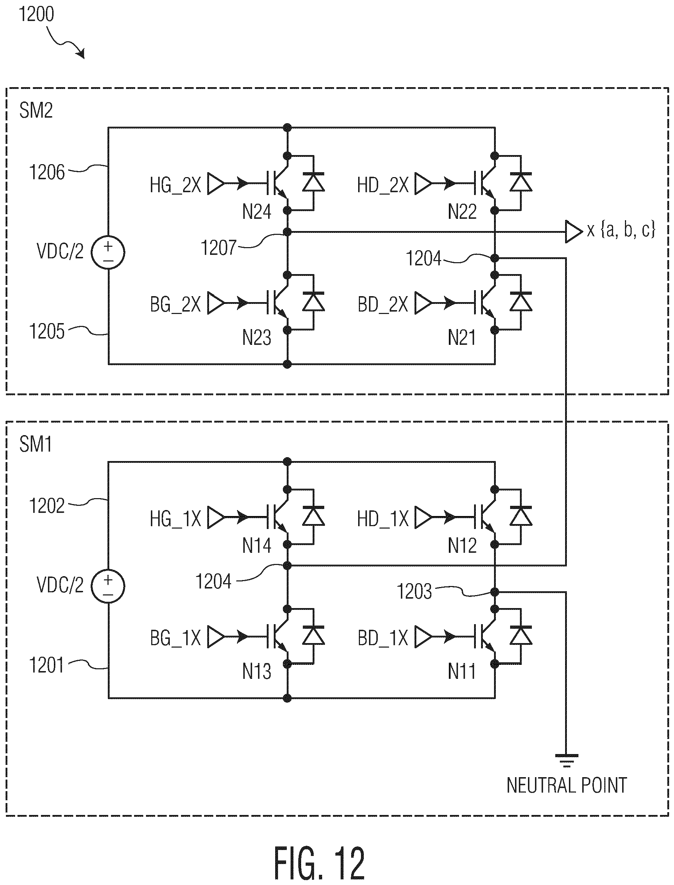

FIG. 12 is a schematic diagram of a phase circuit of a level 5 converter (e.g., N = 2) configured using CHB submodules implemented according to one embodiment.

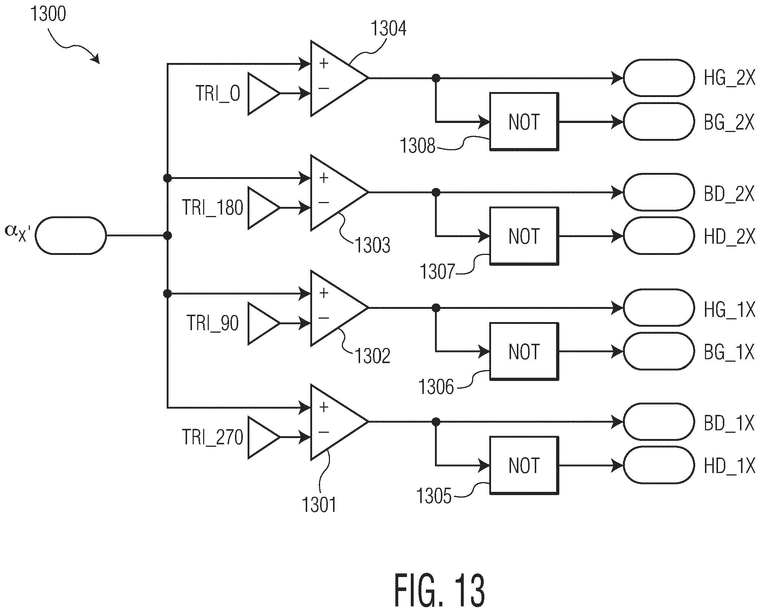

FIG. 13 is a schematic and block diagram of a carrier signal comparator implemented according to one embodiment that may be used within the carrier signal comparator of FIG. 3 for driving one phase "X" (where X = {A, B, C}) of a level 5 converter, such as the phase circuit of FIG. 12, in response to an adjusted modulating signal $\alpha_X'$.

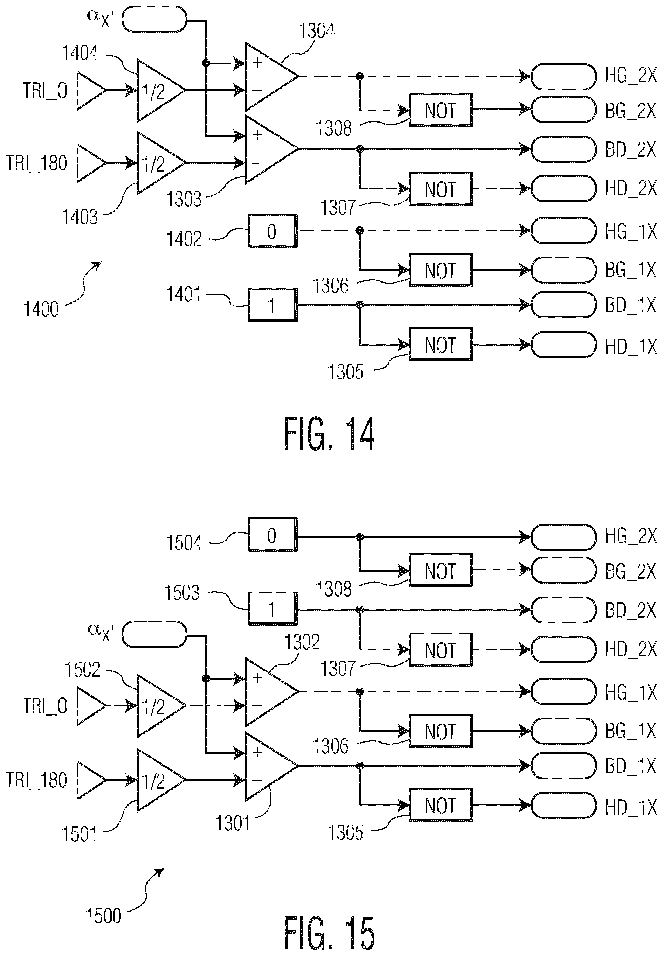

FIG. 14 is a schematic and block diagram of a carrier signal comparator implemented according to one embodiment that represents a reconfiguration of the carrier signal comparator of FIG. 13 in response to a failure of one of the submodules of a corresponding phase, such as failure of the submodule SM1 of the phase circuit of FIG. 12.

FIG. 15 is a schematic and block diagram of a carrier signal comparator implemented according to one embodiment that represents a reconfiguration of the carrier signal comparator of FIG. 13 in response to a failure of one of the submodules of a corresponding phase, such as failure of the submodule SM2 of the phase circuit of FIG. 12.

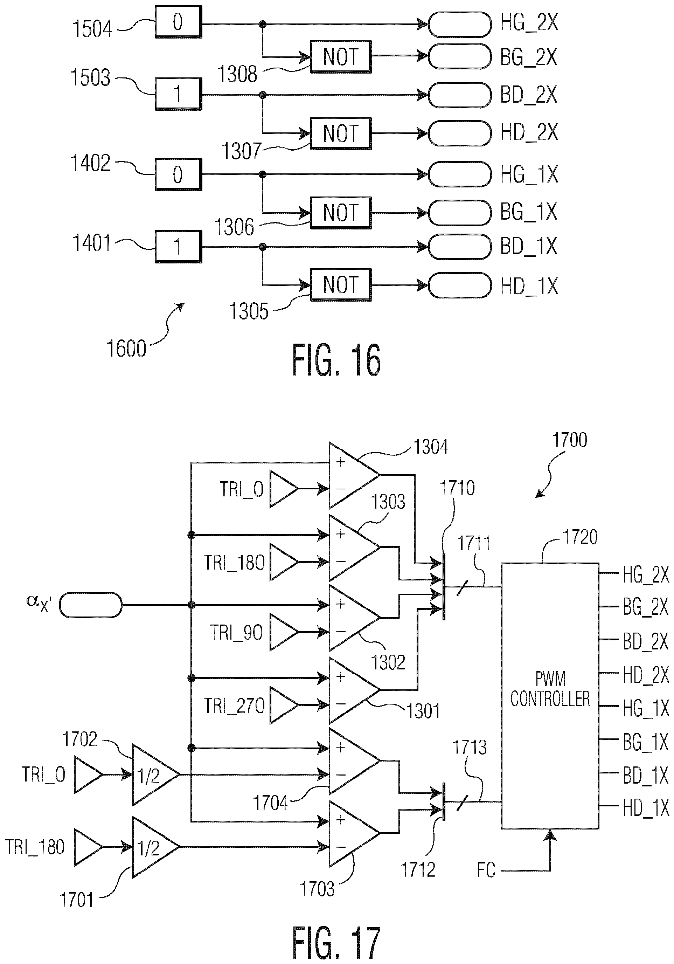

FIG. 16 is a schematic and block diagram of a carrier signal comparator implemented according to one embodiment that represents a reconfiguration of the carrier signal comparator of FIG. 13 in response to a failure of both submodules of a corresponding phase, such as failure of both of the submodules SM1 and SM2 of the phase circuit of FIG. 12.

FIG. 17 is a schematic and block diagram of a carrier signal comparator implemented according to one embodiment that incorporates the functionality of the carrier signal comparator of FIG. 13 along with automatic reconfigurations in the event of failure of one or both submodules of a phase of a level 5 converter.

## DETAILED DESCRIPTION

A self-configurable modulator and method of modulation is described herein that reconfigures pulse width modulation (PWM) drive signals provided to a cascaded multilevel converter of a power inverter based on multiple reference voltages and multiple carrier signals in the event of at least one switching fault or failed submodule within the inverter. The self-configurable modulator includes a reference voltage limiter configured to limit the amplitudes of the reference voltages based on the fault information, a zero-sequence voltage adjuster configured to identify at least one zero-sequence voltage component being the sum of the inverse (or negative, times -1) voltage component for each voltage component that can no longer be synthesized by the corresponding phase and configured to add the at least one zero-sequence voltage component to each of the phases, and a carrier signal comparator configured to realign the carrier signals based on the fault information and to compare the realigned carrier signals with adjusted modulating signals to provide reconfigured PWM drive signals.

FIG. 1 is a simplified block diagram of a power inverter 100 including a self-reconfigurable multilevel space vector pulse-width modulation (SV-PWM) modulator 102 and a cascaded multilevel converter 104. The power inverter 100 is configured to convert a direct-current voltage (VDC) into the three-phase control voltages a, b, and c for controlling a three-phase motor 106, such as, for example, a permanent magnet synchronous machine (PMSM) or the like, which may be used to drive a mechanical load 108. The power inverter 100 may be used for any one of many different types of industrial applications, such as motor drives, electric vehicle (EV) drives, flexible alternating-current (AC) transmission and distribution devices, etc. A position sensor 110 may be included within or otherwise externally coupled to the motor 106 for providing an angular position measurement value $\hat{\theta}$ indicative of the angular position of the rotor of the motor 106 (in which the hat accent symbol "^" positioned above a variable name denotes a measured value). In addition, one or more current sensors 112, such as Hall effect sensors or the like, may be included within or otherwise coupled to the motor 106 for providing 3 current measurement values $\hat{I_A}$, $\hat{I_B}$, and $\hat{I_C}$ indicative of current through the corresponding stator windings of the motor 106. These angular and current measurement values provide status information used by the power inverter 100 for controlling the output torque of the motor 106 as further described herein.

The power inverter 100 further includes a dq0 transformation converter 114, a pair of adders 115 and 116, a proportional-integral (PI) controller 118, an inverse dq0 transformation converter 120, and a fault detector 122. The 3 current measurement values $\hat{I_A}$, $\hat{I_B}$, and $\hat{I_C}$ are provided to respective inputs of the dq0 transformation converter 114, which performs a Clark 3-phase to 2-phase transformation followed by a Park stationary-to-rotating transformation to provide corresponding measurement values $\widehat{I_d}$, and $\widehat{I_q}$, in which $\widehat{I_d}$ provides the direct axis current measurement and $\widehat{I_q}$ provides quadrature axis current measurement of the motor 106.

The adder 115 subtracts $\widehat{I_d}$ from a direct axis current reference value $id_{ref}$ (usually set to zero) to provide an error value $error\_i_d$, and the adder 116 subtracts $\widehat{I_q}$ from a quadrature axis current reference value $iq_{ref}$ to provide an error value $error\_i_q$, in which $iq_{ref}$ is a quadrature reference value proportional to a desired output torque of the motor 106. The error values $error\_i_d$ and $error\_i_q$ are provided to respective inputs of the PI controller 118, which converts the error values into $vd_{ref}$ and $vq_{ref}$ values which are the stator reference direct and quadrature voltage generated signals, respectively. The $vd_{ref}$ and $vq_{ref}$ stator reference voltage generated signals are provided to respective inputs of the inverse dq0 transformation converter 120, which performs inverse Clark and Park transformations and which outputs corresponding stator reference voltages $V_{A\_ref}$, $V_{B\_ref}$, and $V_{C\_ref}$ corresponding to the three phases of the motor 106. The stator reference voltages $V_{A\_ref}$, $V_{B\_ref}$, and $V_{C\_ref}$ are provided to respective inputs of the SV-PWM modulator 102, which outputs a corresponding set of PWM switch drive signals $u_1$, $u_2$, ... $u_n$ to control corresponding power switches within each of three phase circuits A, B, and C of the converter 104. The three phase circuits A, B, and C of the converter 104 are coupled to VDC and a common neutral point (NP), such as any suitable reference voltage including ground (GND), and are configured to output three-phase control voltages a, b, and c for controlling the motor 106.

The converter 104 may be configured according to any one of many different converter topologies. Regardless of the converter topology, the converter 104 is configured to convert the switch drive signals $u_1$, $u_2$, ... $u_n$ into balanced three-phase control voltages a, b, and c during normal operation to control the torque of the motor 106 in response to $iq_{ref}$, which is proportional to a desired output torque of the motor 106. As described further herein, a fault is the result of failure of one or more switches of one or more submodules of the converter 104 such that switching operation is no longer balanced. For example, one or more of the power switches may fail or one or more battery cells powering the switches may fail resulting in a corresponding number of switch failures of the converter 104. The fault detector 122 detects the occurrence and location each failure and reports corresponding fault information FC to the modulator 102. In one embodiment, the fault information FC may be reported in the form of a fault code or the like indicative of the number and relative location of submodule failures. In response to the fault information FC, the modulator 102 automatically reconfigures SV-PWM modulation and performs fault-tolerant modulation rebalancing similar to Neutral Point Shift (NPS) sufficient to continue operation of the motor 106 at a reduced power level as further described herein.

FIG. 2 is a simplified block diagram of a cascaded multilevel converter 204 implemented according to one embodiment which may be used as the converter 104. In general, the converter 204 includes a matrix or array of submodules, in which each submodule includes at least two power switches controlled by a corresponding one of the switch drive signals $u_1$-$u_n$ provided by the modulator 102. In one embodiment, the converter is configured as a cascaded multilevel converter or the like with multiple inverter modules in which each converter module is configured according to any one of multiple converter types. As shown, for example, each of the three phase circuits A, B, and C include a stack of N submodules (e.g., N = 3) coupled to VDC and the common neutral point. Each submodule may be configured according to one of many different types of converters, such as a cascaded full-bridge (CHB) converter 210, a cascaded cross-switched (CCS) converter 212, a cascaded active neutral point clamped (CANPC) converter 214, among other types of converters. Further details are provided herein for the CHB converted used for illustration, whereas the particular details of the other converter types are not further described since well-known. The converter 104 subdivides VDC into a number L of multiple levels in which the number of levels depends upon the number of submodules per phase, such as L = 2N + 1 for CHB type converters.

The fault detector 122 monitors the status of each individual switch converter within each submodule (including battery cells empowering the switch converters), identifies any submodule failures, and provides corresponding fault information FC in the form of fault codes or the like to the modulator 204. The fault information FC identifies the number and relative location of submodule failures in which each "failure" denotes a failure of a submodule. For N submodules per phase, the modulator 102 can perform reconfiguration for up to 3N - 2 total failures (e.g., up to 7 failures for N = 3, or up to 4 failures for N = 2). The modulator 204 is a self-configurable modulator that reconfigures modulation in which failed submodules are bypassed and balanced operation is continued at a reduced power level.

FIG. 3 is a simplified block diagram of the self-reconfigurable multilevel SV-PWM modulator 102 implemented according to one embodiment. The modulator 102 includes a sampling and normalization module 302, a reference voltage limiter 304, a multilevel SV-PWM converter 306, a zero-sequence voltage adjuster 308, and a carrier signal comparator 310. The reference voltages $V_{A\_ref}$, $V_{B\_ref}$, and $V_{C\_ref}$ are provided to respective inputs of the sampling and normalization module 302, which samples and normalizes the reference voltages for SV-PWM and provides corresponding sampled and normalized reference voltages $V_{A\_ref\_SN}$, $V_{B\_ref\_SN}$, and $V_{C\_ref\_SN}$ to respective inputs of the reference voltage limiter 304. In one embodiment, the sampling and normalization module 302 includes an internal sampling block that discretizes the reference voltages based on a sampling frequency Fs. In one embodiment, the sampling block uses a zero-order hold (ZOH) technique in which the sampling time is fixed at a frequency $F_{ZOH}$ = Fs/2. In a more specific embodiment, the reference signals typically have a maximum frequency of about 100 Hertz (Hz) where Fs is typically about 10 kilohertz (KHz), although alternative frequencies are contemplated. In one embodiment, the sampling process imposes a maximum number of two switch commutations per sample period and reduces the impact of any noise present in the reference voltages.

The sampling and normalization module 302 further includes a normalization module that remaps the amplitudes of the reference voltages by multiplying each reference voltage by a gain of 2/VDC. When there are no faults in the system, the maximum amplitude of each of the $V_{A\_ref}$, $V_{B\_ref}$, and $V_{C\_ref}$ for SV-PWM is $VDC/\sqrt{3}$. For cascaded multilevel converters, the maximum available DC voltage per phase, E, is determined as E = VDC/2. In one embodiment, for example, for a converter using two CHB submodules per phase (N = 2, L = 5), each submodule includes a DC battery cell voltage of 100V. Since there are two submodules in series, and each can provide a voltage value of +/- 100V, the maximum available voltage per phase is E = 200V, so that VDC = 400V. The normalization block limits the maximum amplitude according to the following relationship:

$$VDC/\sqrt{3}\ (2/VCD) = 2/\sqrt{3}$$

. In this manner, the normalized amplitudes are mapped to values between

$$[-2/\sqrt{3},\ 2/\sqrt{3}]$$

or approximately [-1.1547, 1.1547]. In this manner, the modulation index is increased from 1 to about 1.1547, which is an increase of about 15% simply because of SV-PWM operation which maximizes utilization of the battery voltage.

The sampled and normalized reference voltages $V_{A\_ref\_SN}$, $V_{B\_ref\_SN}$, and $V_{C\_ref\_SN}$ from the sampling and normalization module 302 are provided to respective inputs of the reference voltage limiter 304, which is configured to reduce or limit the amplitudes of the reference voltages based on the fault information FC and to provide corresponding limited reference voltages $V_{A\_ref\_L}$, $V_{B\_ref\_L}$, and $V_{C\_ref\_L}$. In one embodiment, the modulator 102 includes or otherwise accesses a memory 305 configured as a lookup table (LUT) or the like that stores a maximal modulation index (MMI) for each fault type (FT). The fault type may be included in the fault information FC or otherwise the reference voltage limiter 304 may use the fault information FC to determine the fault type. Either way, the reference voltage limiter 304 may use the fault type to access a corresponding maximal modulation index for reducing the amplitudes of the sampled and normalized reference voltages $V_{A\_ref\_SN}$, $V_{B\_ref\_SN}$, and $V_{C\_ref\_SN}$ for providing the limited reference voltages $V_{A\_ref\_L}$, $V_{B\_ref\_L}$, and $V_{C\_ref\_L}$, respectively.

During normal operation when FC does not indicate any fault conditions, the sampled and normalized reference voltages are passed through unmodified to the multilevel SV-PWM converter 306, or $V_{A\_ref\_L}$ = $V_{A\_ref\_SN}$, $V_{B\_ref\_L}$ = $V_{B\_ref\_SN}$, and $V_{C\_ref\_L}$ = $V_{C\_ref\_SN}$. The multilevel SV-PWM converter 306 is configured to calculate and add a zero-sequence voltage according to SV-PWM operation for any number of submodules per phase (e.g., N submodules per phase). The zero-sequence voltage is calculated based on the number of submodules and the corresponding level and added to the sampled and normalized reference voltages to generate modulating signals $\alpha_A$, $\alpha_B$, and $\alpha_C$.

The modulating signals $\alpha_A$, $\alpha_B$, and $\alpha_C$ are provided to respective inputs of the zero-sequence voltage adjuster 308, which is configured to adjust the modulating signals $\alpha_A$, $\alpha_B$, and $\alpha_C$ based on the fault information FC and to provide corresponding adjusted modulating signals $\alpha_A'$, $\alpha_B'$, and $\alpha_C'$. In one embodiment, the zero-sequence voltage adjuster 308 identifies one or more zero-sequence voltage components for one or more failures including a zero-sequence voltage component for each voltage component that can no longer be synthesized by a corresponding phase. The zero-sequence voltage adjuster 308 adds together the one or more zero-sequence voltage components to determine a combined zero-sequence voltage and adds the combined zero-sequence voltage to each of the modulating signals to generate the adjusted modulating signals for each of the phases. When FC does not indicate any faults, the modulating signals $\alpha_A$, $\alpha_B$, and $\alpha_C$ are simply passed through the zero-sequence voltage adjuster 308 unmodified, meaning that the 'adjusted' modulating signals $\alpha_A'$, $\alpha_B'$, and $\alpha_C'$ are the same as the modulating signals $\alpha_A$, $\alpha_B$, and $\alpha_C$, or $\alpha_A'$ = $\alpha_A$, $a_B$ = $\alpha_B'$, and $\alpha_C$ = $\alpha_C'$ (for no faults).

The carrier signal comparator 310 generates (or otherwise receives) carrier signals and compares each of the modulating signals $\alpha_A'$, $\alpha_B'$, and $\alpha_C'$ (or $\alpha_A$, $\alpha_B$, and $\alpha_C$ without faults) with a corresponding carrier signal to generate the switch drive signals $u_1$ - $u_n$ as further described herein. When FC indicates at least one failure or fault condition, the carrier signal comparator 310 realigns the carrier signals based on the number and type of the detected failures, and compares the adjusted modulating signals $\alpha_A'$, $\alpha_B'$, and $\alpha_C'$ with the realigned carrier signals to generate modified switch drive signals $u_1$ - $u_n$ for reduced power level operation as further described herein.

As further described herein, realigned carrier signals means an adjusted set of carrier signals (e.g., reducing the number of carrier signals without changing the shape of the carrier signals), and a corresponding adjustment of carrier signal amplitudes.

FIG. 4 is a simplified block diagram of a converter 402 with a submodule configuration of N = 2 including 2 CHB submodules per phase and a corresponding space-vector diagram 404 including each of the possible phase state combinations according to one embodiment. In this case, each of the three phase circuits A, B, and C include a cascaded or stacked configuration of 2 submodules each. Each of the submodules of the converter 402 are labeled "GOOD" meaning that each submodule is fully operational without any failures. Each operational phase may have one of 5 possible states, namely: -2, -1, 0, +1, and +2. A phase state combination denoted [As Bs Cs] includes the phase state of each of the three phases A, B, and C, respectively, at a given time, such as, for example, [2 2 2], [0 -2 -2], [-2 1 0], etc. A notation [A2 B2 C2] shown below the space-vector diagram 404 denotes that each of the phase circuits A, B, and C have 2 operational submodules in the illustrated configuration.

The space-vector diagram 404 is subdivided into separate intersecting vector points in which each phase state combination is listed at a corresponding vector point. Equivalent phase state combinations are listed at the same vector point. For example, the center point of the space-vector diagram 404 lists five equivalent phase state combinations [2 2 2], [1 1 1], [0 0 0], [-1 -1 -1], and [-2 -2 -2]. A given vector point of the space-vector diagram 404 may be achieved by the converter 402 as long as that vector point includes at least one achievable phase state combination. Since both submodules of each phase are fully operational in FIG. 4, every vector point of the space-vector diagram 404 is achievable to provide 100% of the available source voltage to each of the phases of the corresponding motor being driven by the converter 402 such as, for example, the motor 106.

An "optimal" circle 406 is drawn within the space-vector diagram 404 with a maximum diameter indicative of the maximum reference voltage. In this case,

$$V_{ref\_max1} = E/\sqrt{3}$$

the maximum reference voltage is corresponding to 100% operating voltage since each submodule is in good operating condition so that all points of the space-vector diagram 404 are achievable by the converter 402. 100% operating voltage corresponds with a maximal modulation index of 1.0 in which the reference voltages are not reduced. In this case, the reference voltage limiter 304 does not limit the reference voltages output by the sampling and normalization module 302. When operating at the maximum reference voltage, the power inverter 100 may operate up to a maximum power level.

FIG. 5 is a simplified block diagram of the converter 402 with the same submodule configuration but with one failed submodule in phase C, and a corresponding space-vector diagram 504 including each of the possible phase state combinations of the converter 402 with the failed submodule according to one embodiment. A phase with at least one failed submodule may be referred to as a compromised phase. Both submodules of phases A and B and the upper submodule of phase C are labeled "GOOD," whereas the lower submodule of phase C is labeled "FAIL" in which phase C is compromised. In this manner, phases A and B may each achieve all 5 possible phase states since fully operational, whereas phase C may only achieve the 3 phase states -1, 0, and +1 when the failed submodule is bypassed. Since phase C includes only 1 operational submodule, it cannot achieve the phase states -2 or +2. A notation [A2 B2 C1] shown below the space-vector diagram 504 denotes that the phases A and B each have 2 good submodules whereas phase C only has 1 working submodule and can only achieve states -1, 0, or +1 in the illustrated configuration.

The space-vector diagram 504 is subdivided into separate vector points in a similar manner as the space-vector diagram 404 in which each phase state combination is listed at a corresponding vector point. Again, equivalent phase state combinations are listed at the same vector point. In fact, the space-vector diagram 504 for the same converter 402 with one failed and bypassed submodule may be derived from the original space-vector diagram 404 according to a derivation procedure by first eliminating each invalid phase state combination that includes state -2 or +2 for phase C, and then by eliminating each vector point that does not include at least one valid phase state combination.

For example, the center point of the space-vector diagram 504 is the same as the center point of the space-vector diagram 404 except that the phase state combinations [2 2 2] and [-2 -2 -2] have been eliminated since no longer achievable by the converter 402. Each of the vector points along the top row, the bottom row, and the lower left side of the space-vector diagram 404 are eliminated since having only one phase state combination with states -2 or +2 for phase C. Along the second row of the space-vector diagram 404, the leftmost vector point with phase state combination [-2 2 -1] remains in the space-vector diagram 504 whereas the rightmost vector point with phase state combination [2 1 -2] is eliminated as not achievable. The remaining vector points of the second row of the space-vector diagram 404 remain as the top row of the space-vector diagram 504 since each includes at least one valid and achievable phase state combination in spite of the single failed submodule. In this manner, the space-vector diagram 504 may be derived from the space-vector diagram 404 by performing the derivation procedure of eliminating unachievable phase state combinations and by eliminating corresponding vector points.

After the space-vector diagram 504 is derived, an optimal circle 506 is drawn within the space-vector diagram 504 having a maximum diameter indicative of the maximum reference voltage achievable for the converter 402 with one failed and bypassed submodule of phase C. The optimal circle 506 is smaller than the circle 406 resulting in a reduction of the maximum reference voltage. In this case, the maximum reference voltage is

$$V_{ref\_max2} = 3E/4\sqrt{3}$$

which is 75% of $V_{ref\_max1}$ derived for the space-vector diagram 404. 75% operating voltage corresponds with a maximal modulation index of 0.75 in which each of the reference voltages are reduced by a corresponding amount. At the reduced voltage level, the power inverter 100 may continue to operate at a reduced power level that is less than the maximum power level.

FIG. 6 is a simplified block diagram of the converter 402 with the same submodule configuration but with two failed submodules in phase C, and a corresponding space-vector diagram 604 including each of the possible phase state combinations of the converter 402 with the two failed submodules according to one embodiment. Both submodules of phases A and B are labeled "GOOD," whereas both submodules of phase C are labeled "FAIL" such that phase C is fully compromised (or fully failed). In this manner, phases A and B may each achieve all 5 possible phase states since fully operational, whereas phase C may only achieve phase state 0 since both submodules of phase C are bypassed. A notation [A2 B2 C0] shown below the space-vector diagram 604 denotes that the phases A and B each have 2 operational submodules whereas phase C has 0 operational submodules and thus can only achieve state 0 in the illustrated configuration.

The space-vector diagram 604 is also subdivided into separate vector points in which each possible phase state combination is listed at corresponding vector points in a similar manner previously described. In fact, the space-vector diagram 604 for the same converter 402 with two failed and bypassed submodules of phase C may be derived from the original space-vector diagram 404 or even the space-vector diagram 504 using the derivation procedure by first eliminating each phase state combination for phase C that is not 0, and then by eliminating each vector point that does not include at least one phase state combination.

After the space-vector diagram 604 is derived, an optimal circle 606 is drawn within the space-vector diagram 604 having a maximum diameter indicative of the maximum reference voltage achievable for the converter 402 given the failure of both submodules of phase C. The circle 606 is smaller than the circles 406 or 506 resulting in a further reduction of the maximum reference voltage. In this case, the maximum reference voltage is

$$V_{ref\_max3} = E/2\sqrt{3}$$

which is 50% of $V_{ref\_max1}$ derived for the space-vector diagram 404. 50% operating voltage corresponds with a maximal modulation index of 0.5 in which each of the reference voltages are reduced by a corresponding amount. At the reduced voltage level, the power inverter 100 may continue to operate but at a reduced power level that is less than the reduced power level of FIG. 5.

FIG. 7 is a simplified block diagram of the converter 402 with the same submodule configuration but with two failed submodules of phase C (fully compromised) and one failed submodule in phase B (partially compromised), and a corresponding space-vector diagram 704 including each of the possible phase state combinations of the converter 402 with the three failed submodules according to one embodiment. Both submodules of phase A and the lower submodule of phase B are labeled "GOOD," whereas the other submodule of phase B and both submodules of phase C are labeled "FAIL." In this case, phase A may each achieve all 5 possible states since fully operational, phase B can only achieve phase states -1, 0, and 1 with one failed a bypassed submodule, and phase C may only achieve phase state 0 as previously described. A notation [A2 B1 C0] shown below the space-vector diagram 704 denotes that phase A has 2 good submodules, phase B has one good submodule, and phase C has no good submodules in the illustrated configuration.

The space-vector diagram 704 is also subdivided into separate vector points in which each possible phase state combination is listed at corresponding vector points in a similar manner previously described. In fact, the space-vector diagram 704 for the same converter 402 with three failed submodules as shown may be derived from the original space-vector diagram 404, or the space-vector diagram 504, or even the space-vector diagram 504, according to the derivation procedure by first eliminating each phase state combination that is not achievable for phases B and C, and then by eliminating each vector point that does not include at least one valid phase state combination. In particular, only those phase state combinations including a C phase state of 0 and B phase states of -1, 0, and 1 remain, and only those vector points including at least one remaining phase state combination remains.

After the space-vector diagram 704 is derived, an optimal circle 706 is drawn within the space-vector diagram 704 with a maximum diameter indicative of the maximum reference voltage achievable for the converter 402 upon failure of both submodules of phase C and 1 submodule of phase B. The circle 706 is smaller than the circles 406, 506, and 606 resulting in a further reduction of the maximum reference voltage. In this case, the maximum reference voltage is $V_{ref\_max4} = E/4\sqrt{3}$ which is 25% of $V_{ref\_max1}$ derived for the space-vector diagram 404. 25% operating voltage corresponds with a maximal modulation index of 0.25 in which each of the reference voltages are reduced by a corresponding amount. At the reduced voltage level, the power inverter 100 may continue to operate but at a reduced power level that is less than the reduced power level of FIG. 6.

The derivation procedure shown and described in Figures 4 - 7 for limiting the amplitudes of the reference voltages in response to at least one failed and bypassed submodule is illustrated as a manual process in which unachievable phase state combinations are first eliminated, followed by elimination of vector points without any valid phase state combinations, and then followed by determination of an optimal circle for determining the maximal modulation index. The manual process may nonetheless be automated in a working system. In one embodiment, for example, the reference voltage limiter 304 implements a modulation index limit algorithm that achieves the same result of the manual derivation procedure very quickly during operation. The modulation index limit algorithm performed by the reference voltage limiter 304 may identify the number and location of failed submodules from the fault information FC, may eliminate corresponding phase state combinations and vector points indicative of unachievable converter states, and may select a set of remaining phase state combinations that maximizes the modulation index for the limited configuration. In another embodiment, a "fault type" may be determined beforehand for each possible combination of failures and stored in the memory 305 in the form of a lookup table or the like which lists a maximal modulation index (MMI) for each fault type (FT) as previously described. FC, which may identify the number and location of failures, may be used as or otherwise converted to a corresponding one of multiple fault types which is used as an index into the LUT to retrieve a corresponding maximal modulation index. The retrieved maximal modulation index is applied to reduce the amplitude of each of the sampled and normalized reference voltages before being input to the multilevel SV-PWM converter 306.

FIG. 8 shows a table 800 that lists a maximal modulation index (MMI) for each of several different fault cases for the converter 402 with a submodule configuration of N = 2 with 2 CHB submodules per phase according to one embodiment. A first column lists a fault case number (#), a second column lists the number of valid submodules for phase A, a third column lists the number of valid submodules for phase B, a fourth column lists the number of valid submodules for phase C, a fifth column lists the number of failed submodules for phase A, a sixth column lists the number of failed submodules for phase B, a seventh column lists the number of failed submodules for phase C, an eighth column lists the total number of failures (or failed submodules) for the converter 402, and a ninth and final column lists the MMI that may be applied by the reference voltage limiter 304 to limit the corresponding reference voltages based on the number and relative location of failures indicated by FC. The maximal modulation index may alternatively be referred to as a voltage limit factor. Each row of the table lists a different fault case.

The first fault case number 0 (no failures - [A2 B2 C2]) corresponds with FIG. 4 in which both submodules of each phase A, B, and C are operational in which a corresponding MMI of 1.0 means that the converter 402 is 100% operational with no failed submodules. In this case, the reference voltage limiter 304 does not limit the corresponding reference voltages provided by the sampling and normalization module 302, so that they are passed unmodified to the multilevel SV-PWM converter 306.

The second fault case number 1 [A2 B2 C1] corresponds with FIG. 5 in which both submodules of phases A and B are operational while phase C has 1 failed submodule in which a corresponding MMI of 0.75 is applied. In this case, the reference voltage limiter 304 limits the corresponding reference voltages provided by the sampling and normalization module 302 to 75% of full value before being passed to the multilevel SV-PWM converter 306.

The third fault case number 2 [A2 B2 C0] corresponds with FIG. 6 in which both submodules of phases A and B are operational while both submodules of phase C have failed in which a corresponding MMI of 0.50 is applied. In this case, the reference voltage limiter 304 limits the corresponding reference voltages provided by the sampling and normalization module 302 to 50% of full value before being passed to the multilevel SV-PWM converter 306.

The fourth fault case number 3 [A2 B1 C0] corresponds with FIG. 7 in which both submodules of phase A are operational, one submodule of phase B has failed while both submodules of phase C have failed in which a corresponding MMI of 0.25 is applied. In this case, the reference voltage limiter 304 limits the corresponding reference voltages provided by the sampling and normalization module 302 to 25% of full value before being passed to the multilevel SV-PWM converter 306.

The fifth fault case number 4 [A1 B1 C0] is a case in which phases A and B only include one working submodule each and in which both submodules of phase C have failed for a total of 4 failures. Even with only 2 working submodules, a corresponding MMI of 0.25 is applied. In this case, the reference voltage limiter 304 limits the corresponding reference voltages provided by the sampling and normalization module 302 to 25% of full value before being passed to the multilevel SV-PWM converter 306.

The sixth fault case number 5 [A1 B2 C2] is substantially similar to fault case number 1 in which only one submodule has failed except that the failure has occurred in phase A. Similar to fault case number 1, a corresponding MMI of 0.75 is applied. In this case, the reference voltage limiter 304 limits the corresponding reference voltages provided by the sampling and normalization module 302 to 75% of full value before being passed to the multilevel SV-PWM converter 306.

The seventh fault case number 6 [A1 B1 C2] is a different case in which two submodules have failed, one in phase A and one in phase B, while phase C is fully operational. A corresponding MMI of 0.50 is applied in which the reference voltage limiter 304 limits the corresponding reference voltages provided by the sampling and normalization module 302 to 50% of full value before being passed to the multilevel SV-PWM converter 306.

The eighth fault case number 7 [A1 B1 C1] is a case in which three submodules have failed, one in each of phases A, B and C. A corresponding MMI of 0.50 is applied in which the reference voltage limiter 304 limits the corresponding reference voltages provided by the sampling and normalization module 302 to 50% of full value before being passed to the multilevel SV-PWM converter 306.

The ninth fault case number 8 [A1 B0 C0] is a case in which only one submodule in phase A is good while all other submodules have failed in which the corresponding MMI is 0.0. Case 8 represents any fault type in which all submodules have failed except one such that only 1 good submodule. When only 1 submodule of 1 phase remains, the modulator 402 is not operational. Although not specifically listed in the table, the cases [A0 B1 C0] and [A0 B0 C1] have the same result in which the MMI is 0.0 such that the modulator 402 is not operational.

The tenth fault case number 9 [A0 B2 C0] is a case in which both submodules of phase B are good while all other submodules have failed. The corresponding MMI is 0.0 meaning the that the modulator 402 is not operational. Case 9 represents any fault type in which only one phase is fully functional while all submodules of the other phases have failed. When only 1 phase remains, even without failures in that phase, the modulator 402 is not operational. This is true even when up to all submodules of only one remaining phase are operational because the modulator 402 is only operational with multiple phases. Although not specifically listed in the table, the cases [A2 B0 C0] and [A0 B0 C2] have the same result in which the MMI is 0.0 such that the modulator 402 is not operational.

The table 800 does not list all possible fault cases but does provide a complete list of representative cases that may be converted to corresponding fault types. For example, cases 1 and 5 represent all cases in which only 1 submodule has failed such that a MMI of 0.75 applies, which may further correspond with a first fault type. Case 2 represents all cases in which all submodules of only one phase have failed such that a MMI of 0.5 applies, which may further correspond with a second fault type. Case 3 represents all cases in which only one phase is fully operational, one phase has completely failed, and the third phase has 1 failed submodule such that a MMI of 0.25 applies, which may further correspond with a third fault type. Case 4 represents all cases in which only one submodule in two different phases are good while the third phase has completely failed such that a MMI of 0.25 applies, which may further correspond with a fourth fault type. Case 6 represents all cases in which only one submodule in two different phases are good while the third phase is fully operational such that a MMI of 0.50 applies, which may further correspond with a fifth fault type.

Although the table 800 is not exhaustive, it clearly shows that an LUT can be stored in the memory 305 or the like that stores a MMI for each possible fault type of the converter 402 or any other level 5 converter. The FC value may be encoded to indicate which submodules have failed (possibly including the total number of failures), and the relative location of the failures (e.g., located in one submodule, distributed among multiple submodules, etc.). In addition, or in the alternative, FC may include a corresponding fault type such as represented in the table 800. For example, all failures of a first fault type correspond with a maximal modulation index of 0.75, all failures of a second fault type correspond with a maximal modulation index of 0.50, all failures of a third fault type correspond with a maximal modulation index of 0.25, and all failures of a fourth fault type correspond with a maximal modulation index of 0.0. It is appreciated that the fault type as described is generalized and only includes sufficient information for the reference voltage limiter 304 to determine a maximal modulation index.

Although table 800 may only be applicable to the converter 402 or similar level 5 converters, table 800 demonstrates that a similar LUT may be constructed for any type of converter including, for example, the level 7 converter 104 shown in FIG. 2, or other converters with more or less voltage levels. In addition, a corresponding LUT may be constructed for any type of converter in which FC may include or otherwise be encoded as an index in such a matter to quickly retrieve a corresponding maximal modulation index given the particular fault type.

FIG. 9 is a series of timing diagrams illustrating the determination of a zero-sequence voltage in the event of loss of a submodule of a phase of a level 5 converter (N = 2) according to one embodiment. Each timing diagram is a plot of a modulating signal within a normalized voltage ranging from -1.0 to +1.0 versus time in normalized units. The first timing diagram at top is a simplified plot of a simplified modulating signal $\alpha_X$ for a phase "X" in which X = {A, B, C} for the case kx = 0, where "kx" denotes the number of failed submodules of phase X. Since the first timing diagram is for the case in which both submodules of phase X are operational, $\alpha_X$ is shown in simplified manner as a full sine wave that varies within the full normalized range between -1.0 and 1.0. The second timing diagram in the middle is a plot of $\alpha_{XCAP}$ for the case $k_X = 1$ in which one of the two submodules of phase X has failed or is otherwise bypassed so that only 1 submodule is operational. The value $\alpha_{XCAP}$ is the same as $\alpha_X$ shown in the top plot up to a maximum amplitude of $\alpha_{max\_X}$, in which $\alpha_{XCAP}$ is effectively clamped at a maximum amplitude of $\alpha_{max\_X}$ (in both positive and negative directions). The value $\alpha_{max\_X}$ is the maximum amplitude of $\alpha_{XCAP}$ according to the equation $\alpha_{max\_X} = 1 - k_X/N$, in which N = 2 so that $\alpha_{max\_X} = 0.5$.

The third timing diagram at bottom is a corresponding zero-sequence voltage $\alpha_{VZSX}$ for phase X, in which $\alpha_{VZSX}$ is determined as $\alpha_{VZS} = \alpha_{XCAP} - \alpha_X$. Essen-

tially, $\alpha_{VZSX}$ is a plot of the inverse voltage component of $\alpha_X$ above $\alpha_{max\_X}$ that is chopped off when kx = 1 that can no longer be synthesized by phase X given the failure of one of the two submodules. In the more general case, a zero-sequence voltage $\alpha_{VZSX}$ for a given phase X is determined as $\alpha_{VZSX}$ = min (1 - $k_X$/N, max (-1 - $k_X$/N, $\alpha_X$)) - $\alpha_X$, in which "min" is the minimum function or the smaller value of the two parenthetical values and "max" is the maximum function or the larger value of the two parenthetical values.

FIG. 10 is a pair of timing diagrams illustrating the determination of a zero-sequence voltage $\alpha_{VZSA}$ in the event of loss of a submodule of phase A of a level 5 converter (N = 2) and corresponding determination of adjusted modulating signals $\alpha_A'$, $\alpha_B'$, and $\alpha_C'$ based on the modulating signals $\alpha_A$, $\alpha_B$, and ac for phases A, B, and C, respectively, according to one embodiment. Each timing diagram is a plot of normalized voltage ranging from -1.0 to +1.0 versus time in normalized units. The upper timing diagram collectively plots the adjusted modulating signals $\alpha_A'$, $\alpha_B'$, and $\alpha_C'$ using solid lines superimposed with the modulating signals $\alpha_A$, $\alpha_B$, and $\alpha_C$ shown using dashed lines when the normal and adjusted signals deviate from each other. The lower timing diagram plots the zero-sequence voltage $\alpha_{VZSA}$ for phase A since a submodule of phase A has failed and is bypassed. The zero-sequence voltage $\alpha_{VZSA}$ is determined in a similar manner as shown in FIG. 9 as the inverse of a difference between the modulating signal $\alpha_A$ and the adjusted modulating signal $\alpha_A'$.

The modulating signal $\alpha_A$ and the adjusted modulating signal $\alpha_A'$ both increase in sinusoidal fashion from an initial time t0 to a subsequent time t1 when both reach a maximum amplitude of $\alpha_{max\_A}$. The normal modulating signal $\alpha_A$ continues to increase above $\alpha_{max\_A}$ in sinusoidal fashion to a peak value and then decreases back again to $\alpha_{max\_A}$ at a time t2. The adjusted modulating signal $\alpha_A'$, however, is capped at $\alpha_{max\_A}$ between times t1 and t2 as shown within an area 1002. The signals $\alpha_A$ and $\alpha_A'$ merge back together at time t2 and both continue decreasing together in sinusoidal fashion until reaching a maximum negative amplitude $-\alpha_{max\_A}$ at time t3. The modulating signal $\alpha_A$ continues to decrease below $-\alpha_{max\_A}$ in sinusoidal fashion to a negative peak value and then increases back again to $-\alpha_{max\_A}$ at a time t4. The adjusted modulating signal $\alpha_A'$, however, is capped at $-\alpha_{max\_A}$ between times t3 and t4 as shown within an area 1006. The signals $\alpha_A$ and $\alpha_A'$ merge back together at time t4 and both continue increasing together in sinusoidal fashion, and operation repeats in similar fashion in successive cycles (not shown).

The zero-sequence voltage $\alpha_{VZSA}$ is zero from time t0 to time t1 while the signals $\alpha_A$ and $\alpha_A'$ are the same. When the signals $\alpha_A$ and $\alpha_A'$ deviate between times t1 and t2 as shown within an area 1002, the zero-sequence voltage $\alpha_{VZSA}$ exhibits a negative sinusoidal hump as shown at 1004. The zero-sequence voltage $\alpha_{VZSA}$ is zero again from time t2 to time t3 while the

signals $\alpha_A$ and $\alpha_A'$ are the same. When the signals $\alpha_A$ and $\alpha_A'$ deviate between times t3 and t4 as shown within an area 1006, the zero-sequence voltage $\alpha_{VZSA}$ exhibits a positive sinusoidal hump as shown at 1008. Thus, the zero-sequence voltage $\alpha_{VZSA}$ is the voltage component that may be added to the modulated signal $\alpha_A$ to achieve the adjusted modulated signal $\alpha_A'$. Operation may repeat in successive cycles.

The zero-sequence voltage $\alpha_{VZSA}$ is added to both of the normal modulating signals $\alpha_B$ and $\alpha_C$ to determine the adjusted modulating signals $\alpha_B'$ and $\alpha_C'$. The normal and adjusted modulating signals $\alpha_B$ and $\alpha_B'$ are the same from time t0 to time t1. Between times t1 and t2, however, the signals $\alpha_B$ and $\alpha_B'$ deviate from each other in which $\alpha_B'$ drops below $\alpha_B$ by the amount of $\alpha_{VZSA}$ as shown at 1004. The signals $\alpha_B$ and $\alpha_B'$ merge back together and are the same between times t2 and t3. Between times t3 and t4, however, the signals $\alpha_B$ and $\alpha_B'$ deviate from each other in which $\alpha_B'$ rises above $\alpha_B$ by the amount of $\alpha_{VZSA}$ as shown at 1008. The signals $\alpha_B$ and $\alpha_B'$ merge back together at time t4, and so on.

In a similar manner, the normal and adjusted modulating signals ac and ac' are the same from time t0 to time t1. Between times t1 and t2, however, the signals ac and ac' deviate from each other in which ac' drops below ac by the amount of $\alpha_{VZSA}$ as shown at 1004. The signals ac and ac' merge back together and are the same between times t2 and t3. Between times t3 and t4, however, the signals ac and ac' deviate from each other in which ac' rises above ac by the amount of $\alpha_{VZSA}$ as shown at 1008. The signals ac and ac' merge back together at time t4, and so on.

FIG. 10 illustrates operation of the zero-sequence voltage adjuster 308 for the case in which one submodule of phase A fails. The zero-sequence voltage adjuster 308 is configured to calculate the zero-sequence voltage for each phase in which a submodule failure has occurred, to add the calculated zero-sequence voltages together to determine a combined zero-sequence voltage for the modulator, and to add the combined zero-sequence voltage to each of the normal modulating signals to determine the corresponding adjusted modulating signals. When there is no failure of a submodule in a given phase, then the corresponding zero-sequence voltage for that phase is zero. In this manner, for the case shown in FIG. 10, the zero-sequence voltages $\alpha_{VZSB}$ and avzsc are both zero, so that $\alpha_{VZSA}$ for phase A is the same as the combined zero-sequence voltage, or $\alpha_{VZS}$ = $\alpha_{VZSA}$. The combined zero-sequence voltage avzs (which is equal to $\alpha_{VZSA}$ for the illustrated case) is added to each of the normal modulating signals $\alpha_A$, $\alpha_B$ and $\alpha_C$ to determine the adjusted modulating signals $\alpha_A'$ $\alpha_B'$ and $\alpha_C'$.

FIG. 11 is a pair of timing diagrams illustrating determining a zero-sequence voltage $\alpha_{VZSA}$ in the event of loss of both submodules of phase A of a level 5 converter (N = 2) and corresponding determination of adjusted modulating signals $\alpha_A'$, $\alpha_B'$, and $a_C'$ based on the nor-

mal modulating signals $\alpha_A$, $\alpha_B$, and $\alpha_C$ for phases A, B, and C, respectively, according to one embodiment. Each timing diagram is a plot of normalized voltage ranging from -1.0 to +1.0 versus time in normalized units. The upper timing diagram collectively plots the adjusted modulating signals $\alpha_A$', $\alpha_B$', and $\alpha_C$' using solid lines superimposed with the normal modulating signals $\alpha_A$, $\alpha_B$, and ac shown using dashed lines when the normal and adjusted signals deviate from each other. The lower timing diagram plots the zero-sequence voltage $\alpha_{VZSA}$ for phase A since both submodules of phase A have failed and are bypassed. The zero-sequence voltage $\alpha_{VZSA}$ is determined in a similar manner as shown in FIG. 9 as a difference between the adjusted modulating signal $\alpha_A$' and the normal modulating signal $\alpha_A$.

Failure of both submodules of phase A occurs at least as of a time t0. At time t0, $\alpha_A$' flatlines at zero from t0 to subsequent time t4, while $\alpha_A$ continues following a sinusoidal pattern reaching a positive peak above 0.5 at time 11, going back to zero at time t2, reaching a negative peak below -0.5 at time t3, and going back to zero at time t4. The zero-sequence voltage $\alpha_{VZSA}$ for phase A is the negative version of the modulation signal $\alpha_A$. The modulating signal $\alpha_B$ has a similar sinusoidal pattern as $\alpha_A$ between times t0 and t4 but with a different phase. The zero-sequence voltage $\alpha_{VZSA}$ is added to $\alpha_B$ so that the adjusted modulating signal $\alpha_B$' falls below $\alpha_B$ between times t0 and t2 and rises above $\alpha_B$ between times t2 and t4. Similarly, the modulating signal ac has a similar sinusoidal pattern as $\alpha_A$ between times t0 and t4 but with a different phase. The zero-sequence voltage $\alpha_{VZSA}$ is added to $\alpha_C$ so that the adjusted modulating signal ac' falls below ac between times t0 and t2 and rises above ac between times t2 and t4. In a similar manner as previously described, the zero-sequence voltage adjuster 308 determines the zero sequence voltage $\alpha_{VZSA}$ in response to the failure of both submodules of phase A, and adds $\alpha_{VZSA}$ to $\alpha_A$, $\alpha_b$, and $\alpha_c$ to calculate the adjusted modulating signals $\alpha_A$', $\alpha_B$', and $\alpha_C$', respectively.

Although not shown in FIGs 10 or 11, a similar failure of at least one submodule in phase B results in determination of a zero-sequence voltage $\alpha_{VZSB}$, and a similar failure of at least one submodule in phase C results in determination of a zero-sequence voltage $\alpha_{VZSC}$. In the general case, a combined zero-sequence voltage $\alpha_{VZS}$ for the three phases A, B, and C may be determined as the sum of the zero-sequence voltage determined for each of the individual three phases, or $\alpha_{VZS} = \alpha_{VZSA} + \alpha_{VZSB} + \alpha_{VZSC}$. The zero-sequence voltage adjuster 308 calculates the zero-sequence voltage for each phase, adds them together to determine the combined zero-sequence voltage $\alpha_{VZS}$, and then determines the adjusted modulating signals $\alpha_A$', $\alpha_B$', and $\alpha_C$' by adding the combined zero-sequence voltage to each of the modulating signals $\alpha_A$, $\alpha_B$, and $\alpha_C$, or $\alpha_A$' = $\alpha_A + \alpha_{VZS}$, $\alpha_B$' = $\alpha_B + \alpha_{VZS}$, and $\alpha_C$' = $\alpha_C + \alpha_{VZS}$. Stated another way, each zero-sequence voltage of each phase, which is the inverse of a voltage component that can no longer be synthesized by that phase, is added to the other phases. The zero-sequence voltage adjuster 308 is configured to make these calculations in real time in response to one or more submodule failures and for adjusting the modulating signals.

FIG. 12 is a schematic diagram of a phase circuit 1200 of a level 5 converter (e.g., N = 2) configured using CHB submodules implemented according to one embodiment. The phase circuit 1200 is used to illustrate an exemplary configuration of the carrier signal comparator 310 configured to drive a level 5 converter, such as the converter 402. The phase circuit 1200 represents the circuitry of any one of the phases A, B, or C of the converter, such as the converter 402. The phase circuit 1200 includes a lower submodule SM1 and an upper submodule SM2. The lower submodule SM1 includes 4 switching transistors N11, N12, N13, and N14, each shown as an N-channel insulated-gate bipolar transistor (IGBT). A VDC/2 voltage source has a negative terminal coupled to a node 1201 and a positive terminal coupled a node 1202. N11 has a source terminal coupled to node 1201, a drain terminal coupled to an intermediate node 1203, and a gate terminal receiving a drive signal BD_1X. N12 has a source terminal coupled to node 1203, a drain terminal coupled to node 1202, and a gate terminal receiving a drive signal HD_1X. N13 has a source terminal coupled to node 1201, a drain terminal coupled to a node 1204, and a gate terminal receiving a drive signal BG_1X. N14 has a source terminal coupled to node 1204, a drain terminal coupled to node 1202, and a gate terminal receiving a drive signal HG_1X. Node 1203 is coupled to a common neutral point NP, which may be ground (GND) or any other suitable reference voltage level. Node 1204 is coupled to the submodule SM2.

The upper submodule SM1 includes 4 switching transistors N21, N22, N23, and N24, each shown as an N-channel IGBT. Another VDC/2 voltage source has a negative terminal coupled to a node 1205 and a positive terminal coupled a node 1206. N21 has a source terminal coupled to node 1205, a drain terminal coupled to node 1204, and a gate terminal receiving a drive signal BD_2X. N22 has a source terminal coupled to node 1204, a drain terminal coupled to node 1206, and a gate terminal receiving a drive signal HD_2X. N23 has a source terminal coupled to node 1205, a drain terminal coupled to a node 1207, and a gate terminal receiving a drive signal BG_2X. N24 has a source terminal coupled to node 1207, a drain terminal coupled to node 1206, and a gate terminal receiving a drive signal HG_2X. Node 1207 is an output terminal providing one of three three-phase control voltages shown as "x", which represents any one of the three-phase control voltages a, b, and c which may be provided to the motor 106.

With reference to both FIGs 1 and 12, the collective set of HG, BG, HD, and BD drive signals represent a subset of the set of PWM switch drive signals $u_1$, $u_2$, ... $u_n$ from the SV-PWM modulator 102 to the modulator 402 used as the modulator 104.

FIG. 13 is a schematic and block diagram of a carrier signal comparator 1300 implemented according to one embodiment that may be used within the carrier signal comparator 310 for driving one phase "X" (where X = {A, B, C}) of a level 5 converter, such as the phase circuit 1200, in response to an adjusted modulating signal $\alpha_X$'. The adjusted modulating signal $\alpha_X$', which represents a corresponding one of the adjusted modulating signals $\alpha_A$', $\alpha_B$', and $\alpha_C$', is provided to a positive input of each of a set of comparators 1301, 1302, 1303, and 1304. The carrier signal comparator 310 internally generates a set of carrier signals in the form of triangular waves TRI_0, TRI_180, TRI_90, and TRI_270 phase-shifted relative to each other by an angle difference $\theta$ determined according to the following equation: $\theta = 360°/2N$. For a 5 level converter in which N = 2, $\theta = 90°$, so that the triangular-wave carrier signals are separated by 90°, in which if TRI_0 is at phase 0°, TRI_90 is shifted by 90° to relative phase 90°, TRI_180 is shifted by another 90° to relative phase 180°, and TRI_270 is shifted by another 90° to relative phase 270°. As shown, TRI_0 is provided to the negative input of the comparator 1304, TRI_180 is provided to the negative input of the comparator 1303, TRI_90 is provided to the negative input of the comparator 1302, and TRI_270 is provided to the negative input of the comparator 1301.

The comparator 1301 compares $\alpha_X$' with TRI_270 and outputs the drive signal BD_1X, the comparator 1302 compares $\alpha_X$' with TRI_90 and outputs the drive signal HG_1X, comparator 1303 compares $\alpha_X$' with TRI_180 and outputs the drive signal BD_2X, and the comparator 1304 compares $\alpha_X$' with TRI_0 and outputs the drive signal HG_2X. An inverter 1305 inverts BD_1X and outputs the drive signal HD_1X, an inverter 1306 inverts HG_1X and outputs the drive signal BG_1X, an inverter 1307 inverts BD_2X and outputs the drive signal HD 2X, and an inverter 1308 inverts HG_2X and outputs the drive signal BG_2X. In this manner, the carrier signal comparator 1300 converts the adjusted modulating signal $\alpha_X$' using the triangular-wave carrier signals into the drive signals used to drive the switching transistors N11, N12, N13, N14, N21, N22, N23, and N24 of the phase circuit 1200 of the 5 level converter. The other two phases of the converter may be configured in substantially the same manner as the phase circuit 1200. Similar carrier signal comparator circuits are used to drive the other two phases of the converter in substantially similar manner during nominal conditions without faults.

FIG. 14 is a schematic and block diagram of a carrier signal comparator 1400 implemented according to one embodiment that represents a reconfiguration of the carrier signal comparator 1300 in response to a failure of one of the submodules of a corresponding phase, such as failure of the submodule SM1 of the phase circuit 1200. Upon failure of the submodule SM1 (which corresponds with the failure of the lower submodule of the converter 402 shown in FIG. 5), the corresponding transistors N11, N12, N13, and N14 no longer need to be driven by PWM drive signals and thus no longer need comparators that compare $\alpha_X$' with carrier signals. Instead, a logic circuit 1401 drives BD_1X to a logic "1" and another logic circuit 1402 drives HG_1X to a logic "0". The inverter 1305 inverts BD_1X to drive HD_1X to a logic "0" while the inverter 1306 inverts HG_1X to drive BG_1X to a logic "1". Each of the logic circuits may be implemented with switches to force the corresponding logic state. With reference to the phase circuit 1200 shown in FIG. 12, the logic circuits 1401 and 1402 turn N11 and N13 on and N12 and N14 off, which effectively couples node 1204 to node 1203 coupled to the common neutral point NP to effectively bypass the failed submodule SM1 in this case.

For a fully operational 5 level converter with N = 2, a failed submodule effectively decreases N to N - 1 = 1, so that the angle difference $\theta$, which is determined as $\theta = 360°/2N$, is changed from 90° to 180°. In this manner, for the remaining operational submodule SM2, the needed set of triangular-wave carrier signals changes to TRI_0 at phase 0° and TRI_180 at phase 180°. In addition, since the maximum amplitude of $\alpha_X$' is reduced, the amplitudes of the carrier signals are also reduced. In general, for N submodules per phase and for F failures in a given phase, the amplitude gain adjustment is (N - F)/2. TRI_180 is provided through an amplifier 1403 to the negative input of the comparator 1303 and TRI_0 is provided through an amplifier 1404 to the negative input of the comparator 1304, in which the amplifiers 1403 and 1404 have a gain of ½ or 0.5 in order to attenuate the amplitudes of the corresponding carrier signals. In this manner, the amplitudes of TRI_180 and TRI_0 are halved. The adjusted modulating signal $\alpha_X$' is still provided to the positive inputs of the comparators 1303 and 1304, which output the drive signals BD_2X and HG_2X, respectively, in similar manner as before. In addition, the inverter 1307 inverts BD_2X and outputs the drive signal HD_2X and the inverter 1308 inverts HG_2X and outputs the drive signal BG_2X as before. In this manner, the submodule SM2 remains operational while the failed submodule SM1 is bypassed.

FIG. 15 is a schematic and block diagram of a carrier signal comparator 1500 implemented according to one embodiment that represents a reconfiguration of the carrier signal comparator 1300 in response to a failure of one of the submodules of a corresponding phase, such as failure of the submodule SM2 of the phase circuit 1200. Upon failure of the submodule SM2 (meaning failure of the upper submodule instead of failure of the lower submodule of the converter 402 shown in FIG. 5), the corresponding transistors N21, N22, N23, and N24 no longer need to be driven by PWM drive signals and thus no longer need comparators that compare $\alpha_X$' with carrier signals. Instead, a logic circuit 1503 drives BD_2X to a logic "1" and another logic circuit 1504 drives HG_2X to a logic "0". The inverter 1307 inverts BD_2X to drive HD_2X to a logic "0" while the inverter 1308 inverts HG_2X to drive BG_2X to a logic "1". Again, each of the logic circuits may be implemented with switches to force the corresponding logic state. With reference to the phase circuit 1200 shown in FIG. 12, the logic circuits 1503 and 1504 turn N21 and N23 on and N22 and N24 off, which effectively couples node 1204 to the output node 1207 driving the three-phase control voltage x.

In a similar manner as described for the carrier signal comparator 1400, for a fully operational 5 level converter with N = 2, a failed submodule effectively decreases N to N - 1 = 1, so that the angle difference $\theta$, which is determined as $\theta = 360°/2N$, is changed from 90° to 180°. In this manner, for the remaining operational submodule SM1, the needed set of triangular-wave carrier signals changes to TRI_0 at phase 0° and TRI_180 at phase 180°. In addition, since the maximum amplitude of $\alpha_X$' is reduced, the amplitudes of the carrier signals are also reduced by gain adjustment (N - F)/N. TRI_180 is provided through an amplifier 1501 to the negative input of the comparator 1301 and TRI_0 is provided through an amplifier 1502 to the negative input of the comparator 1302, in which the amplifiers 1501 and 1502 have a gain of ½ or 0.5 in order to attenuate the amplitudes of the corresponding carrier signals. In this manner, the amplitudes of TRI_180 and TRI_0 are halved. The adjusted modulating signal $\alpha_X$' is still provided to the positive inputs of the comparators 1301 and 1302, which output the drive signals BD_1X and HG_1X, respectively, in similar manner as before. In addition, the inverter 1305 inverts BD_1X and outputs the drive signal HD_1X and the inverter 1306 inverts HG_1X and outputs the drive signal BG_1X as before. In this manner, the submodule SM1 remains operational while the failed submodule SM2 is bypassed.

With reference back to the converter 402 shown in FIGs 4 and 5, failure of the upper submodule while the lower submodule remains operational has substantially the same impact as failure of the lower submodules while the upper submodule remains operational. In either case, the failed submodule is simply bypassed and the phase remains operational with a single submodule.

FIG. 16 is a schematic and block diagram of a carrier signal comparator 1600 implemented according to one embodiment that represents a reconfiguration of the carrier signal comparator 1300 in response to a failure of both submodules of a corresponding phase, such as failure of both of the submodules SM1 and SM2 of the phase circuit 1200. This condition is substantially the same as failure of both submodules of the converter 402 as shown in FIG. 6. In this case, the logic circuits 1401, 1402, 1503, and 1504 simply bypass both submodules of the phase. With reference to the phase circuit 1200, the logic circuits 1401 and 1402 and inverters 1305 and 1306 bypass SM1 to couple node 1204 to NP, and the logic circuits 1503 and 1504 and inverters 1307 and 1308 bypass SM2 to couple output node 1207 to node 1204 and thus to NP, resulting in the phase remaining at zero as shown in FIG. 11.

FIGs 12 - 16 illustrate realignment of the carrier signals in the event of submodule failure for the case in which N = 2 or 2 submodules per phase. Carrier signal realignment means adjusting the set of carrier signals applied in each phase with at least one submodule failure without changing the carrier signal shape. For example, the carrier signals TRI_0 and TRI_180 in FIGs 14 and 15 are the same as the carrier signals TRI_0 and TRI_180 in FIG. 13. The adjustment of the set of carrier signals for other values of N is similar. In addition, carrier signal realignment means reducing the carrier signal amplitudes according to gain adjustment (N - F)/N (in which N is the number of submodules per phase and F is the number of submodule failures per phase). For example, for N = 2, the corresponding set of gain adjustments is 1 (no submodule failures of the phase), ½ (1 submodule failure of the phase), and 0 (failure of both submodules of the phase), for N = 3, the corresponding set of gain adjustments is 1 (no submodule failures of the phase), 2/3 (1 submodule failure of the phase), 1/3 (2 submodules failures of the phase, and 0 (failure of all three submodules of the phase), and so on.

FIG. 17 is a schematic and block diagram of a carrier signal comparator 1700 implemented according to one embodiment that incorporates the functionality of the carrier signal comparator 1300 along with automatic reconfigurations in the event of failure of one or both submodules of a phase denoted X of a level 5 converter. The carrier signal comparator 1700 includes the comparators 1301, 1302, 1303, and 1304, another pair of comparators 1703 and 1704, amplifiers 1701 and 1702, and a PWM controller 1720. The comparators 1301 - 1304 compare the adjusted modulating signal $\alpha_X$' with the triangular wave carrier signals TRI_270, TRI_90, TRI_180, and TRI_0, respectively, in a similar manner previously described. The outputs of the comparators 1301 - 1304 are provided through a port 1710 onto a bus 1711 and provided to respective inputs of the PWM controller 1720. The amplifiers 1701 and 1702 attenuate the amplitudes of the triangular wave carrier signals TRI_180 and TRI_0, respectively, by half, and the comparators 1703 and 1704 compare the adjusted modulating signal $\alpha_X$' with the reduced amplitude versions triangular wave carrier signals TRI_180 and TRI_0, respectively. The outputs of the comparators 1703 and 1704 are provided through a port 1712 onto a bus 1713 and provided to respective inputs of the PWM controller 1720. The PWM controller 1720 receives FC and outputs the drive signals HG_2X, BG_2X, BD_2X, HD_2X, HG_1X, BG_1X, BD_1X, and HD_1X based on the signals provided on the buses 1711 and 1713.

During normal operation, the comparators 1301 - 1304 provide the drive signals BD_1X, HG_1X, BD_2X, and HG_2X in a similar manner as the carrier signal comparator 1300, which are forwarded by the PWM controller 1720 to respective transistors of the phase. The PWM controller 1720 includes internal inverters (not shown) for generating the drive signals HD_1X, BG_1X, HD_2X, and HG_2X based on the drive signals BD_1X, HG_1X, BD_2X, and HG_2X, respectively, in a similar manner as the carrier signal comparator 1300, which are also forwarded to respective transistors of the phase.

In the event of failure of one of the two submodules of the phase, the PWM controller 1720 switches to the drive signals provided on the bus from the comparators 1703 and 1704 to forward the corresponding drive signals to the corresponding transistors of the phase. In addition, the PWM controller 1720 includes internal inverters for generating the other two drive signals. For example, in the event of failure of the lower submodule, the PWM controller 1720 provides the drive signals HG_2X and BD_2X from the comparators 1703 and 1704, respectively, and inverts HG_2X and BD_2X to provide the drive signals BG_2X and HD_2X, respectively. Similarly, in the event of failure of the upper submodule, the PWM controller 1720 provides the drive signals HG_1X and BD_1X from the comparators 1703 and 1704, respectively, and inverts HG_1X and BD_1X to provide the drive signals BG_1X and HD_1X, respectively.

In the event of failure of both submodules of the phase, the PWM controller 1720 includes internal logic circuitry to force the drive signals HG_2X, HD_2X, HG_1X, and HD_1X to logic "0" and to force the drive signals BG_2X, BD_2X, BG_1X, and BD_1X to logic "1" in a similar manner previously described.

The carrier signal comparator 1700 may be repeated for generating the drive signals for each of the three phases of a level 5 converter, such as the modulator 402. Although not explicitly shown, similar carrier signal comparator circuits may be configured for providing the drive signal for other types of converters, such as the level 7 converter 104 shown in FIG. 2. In that case, a similar configuration may be used to generate the drive signals for the three submodules of each phase, and to adjust operation in the event of failure of one, two, or all three submodules of any given phase.

One or more embodiments of the present disclosure may include features recited in the following number of clauses:

1. A self-configurable modulator that reconfigures a plurality of pulse width modulation (PWM) drive signals provided to a cascaded multilevel converter in response to fault information, wherein the cascaded multilevel converter comprises a plurality of phases each comprising a plurality of submodules and wherein the fault information indicates failure of any of the plurality of submodules of the cascaded multilevel converter, the self-configurable modulator comprising: a reference voltage limiter configured to limit amplitudes of a plurality of reference voltages based on the fault information; a zero-sequence voltage adjuster configured to calculate at least one zero-sequence voltage from the fault information, and to add the at least one zero-sequence voltage to each one of a plurality of modulating signals generated for a plurality of phases to provide a plurality of adjusted modulating signals; and a carrier signal comparator configured to realign a plurality of carrier signals based on the fault information and to compare a plurality of realigned carrier signals with the plurality of adjusted modulating signals to provide a plurality of reconfigured PWM drive signals.

2. The self-configurable modulator of clause 1, wherein the reference voltage limiter is configured to eliminate phase state combinations and to eliminate corresponding vector points indicative of unachievable converter states based on the fault information, and to select a set of remaining phase state combinations that maximizes the modulation index for the limited configuration as a result of failure of at the least one submodule.

3. The self-configurable modulator of clause 1, wherein the reference voltage limiter is configured to determine a fault type based on the fault information, to use the determined fault type to retrieve a corresponding maximal modulation index from a memory that lists a plurality of maximum modulation indices for a plurality of fault types, and to use the retrieved maximal modulation index to limit the amplitudes of the reference voltages.

4. The self-configurable modulator of clause 1, wherein each zero-sequence voltage comprises the sum of the inverse voltage components for each voltage component that can no longer be synthesized by a corresponding phase of the cascaded multilevel converter having at least one failed submodule.

5. The self-configurable modulator of clause 1, wherein the zero-sequence voltage adjuster is configured to calculate a zero-sequence voltage for each phase of the cascaded multilevel converter having at least one failed submodule, to add calculated zero-sequence voltages together to determine a combined zero-sequence voltage, and to add the combined zero-sequence voltage to each modulating signal to provide a corresponding adjusted modulating signal.

6. The self-configurable modulator of clause 1, wherein the carrier signal comparator is configured to bypass each failed submodule of a compromised phase by driving corresponding submodule switches to a predetermined logic state, to determine an adjusted angle difference between carrier signals of remaining submodules of the compromised phase, and to determine an adjusted set of carrier signals for the remaining submodules of the compromised phase.

7. The self-configurable modulator of clause 6, wherein the carrier signal comparator is further configured to attenuate amplitudes of the adjusted set of carrier signals.

8. The self-configurable modulator of clause 1, wherein the carrier signal comparator comprises: a plurality of drive circuits for each of the plurality of phases, wherein each drive circuit comprises a plurality of comparators configured to compare a modulating signal or an adjusted modulating signal with a plurality of carrier signals for generating a corresponding one of a plurality of sets of PWM signals; and a PWM controller configured to bypass each failed submodule of each compromised phase by driving corresponding submodule switches to a predetermined logic state, and to select from among the plurality of sets of PWM signals and to redirect selected sets of PWM signals to operating submodules of each compromised phase.

9. The self-configurable modulator of clause 1, further comprising a sampling and normalization module that discretizes received reference voltages based on a sampling frequency and that remaps amplitudes of the reference voltages by multiplying each reference voltage by a predetermined gain to provide a plurality of discretized and amplified reference voltages to the reference voltage limiter.

10. The self-configurable modulator of clause 1, further comprising a multilevel space vector PWM converter configured to calculate a zero-sequence voltage according to SV-PWM operation and to add the calculated zero-sequence voltage to a plurality of amplitude limited reference voltages from the reference voltage limiter for operational submodules of each of the plurality of phases to provide the plurality of modulating signals to the zero-sequence voltage adjuster.

11. A method of reconfiguring a plurality of pulse width modulation (PWM) drive signals provided to a cascaded multilevel converter in response to fault information, wherein the cascaded multilevel converter comprises a plurality of phases each comprising a plurality of submodules and wherein the fault information indicates failure of any of the plurality of submodules of the cascaded multilevel converter, the method comprising: limiting amplitudes of a plurality of reference voltages based on the fault information; calculating at least one zero-sequence voltage from the fault information, and adding the at least one zero-sequence voltage to each one of a plurality of modulating signals generated for a plurality of phases to provide a plurality of adjusted modulating signals; and realigning a plurality of carrier signals based on the fault information and comparing a plurality of realigned carrier signals with the plurality of adjusted modulating signals to provide a plurality of reconfigured PWM drive signals.

12. The method of clause 11, wherein the limiting amplitudes of a plurality of reference voltages comprises: eliminating phase state combinations and corresponding vector points indicative of unachievable converter states based on the fault information; and selecting a set of remaining phase state combinations that maximizes the modulation index for the limited configuration as a result of failure of any of the plurality of submodules.

13. The method of clause 11, wherein the limiting amplitudes of a plurality of reference voltages comprises: determining a fault type based on the fault information; using the determined fault type to retrieve a corresponding maximal modulation index from a memory that lists a plurality of maximum modulation indices for a plurality of fault types; and using the retrieved maximal modulation index to limit the amplitudes of the reference voltages.

14. The method of clause 11, wherein the calculating at least one zero-sequence voltage comprises summing inverse voltage components for each voltage component that can no longer be synthesized by a corresponding phase of the cascaded multilevel converter having at least one failed submodule.

15. The method of clause 11, wherein the calculating at least one zero-sequence voltage comprises: calculating a zero-sequence voltage for each phase of the cascaded multilevel converter having at least one failed submodule; adding calculated zero-sequence voltages together to determine a combined zero-sequence voltage; and adding the combined zero-sequence voltage to each modulating signal to provide a corresponding adjusted modulating signal.

16. The method of clause 11, wherein the realigning a plurality of carrier signals based on the fault information and comparing a plurality of realigned carrier signals comprises: bypassing each failed submodule of a compromised phase by driving corresponding submodule switches to a predetermined logic state; determining an adjusted angle difference between carrier signals of remaining submodules of the compromised phase; and determining an adjusted set of carrier signals for the remaining submodules of the compromised phase.

17. The method of clause 16, further comprising attenuating amplitudes of the adjusted set of carrier signals.

18. The method of clause 11, wherein the realigning a plurality of carrier signals based on the fault information and comparing a plurality of realigned carrier signals comprises: comparing a modulating signal or an adjusted modulating signal with a plurality of carrier signals for generating a corresponding one of a plurality of sets of PWM signals; bypassing each failed submodule of each compromised phase by driving corresponding submodule switches to a predetermined logic state; and selecting from among the plurality of sets of PWM signals and redirecting selected sets of PWM signals to operating submodules of each compromised phase.

19. The method of clause 11, further comprising: discretizing received reference voltages based on a sampling frequency; and amplifying each reference voltage by a predetermined gain and providing a plurality of discretized and amplified reference voltages to the reference voltage limiter.

20. The method of clause 11, further comprising: calculating a zero-sequence voltage according to SV-PWM operation; and adding the calculated zero-sequence voltage to a plurality of amplitude limited reference voltages from the reference voltage limiter for operational submodules of each of the plurality of phases to provide the plurality of modulating signals to the zero-sequence voltage adjuster.

Although the present invention has been described in connection with several embodiments, the invention is not intended to be limited to the specific forms set forth herein. On the contrary, it is intended to cover such alternatives, modifications, and equivalents as can be reasonably included within the scope of the invention as defined by the appended claims. For example, variations of positive circuitry or negative circuitry may be used in various embodiments in which the present invention is not limited to specific circuitry polarities, device types or voltage or error levels or the like. For example, circuitry states, such as circuitry low and circuitry high may be reversed depending upon whether the pin or signal is implemented in positive or negative circuitry or the like. In some cases, the circuitry state may be programmable in which the circuitry state may be reversed for a given circuitry function.

The terms "a" or "an," as used herein, are defined as one or more than one. Also, the use of introductory phrases such as "at least one" and "one or more" in the claims should not be construed to imply that the introduction of another claim element by the indefinite articles "a" or "an" limits any particular claim containing such introduced claim element to inventions containing only one such element, even when the same claim includes the introductory phrases "one or more" or "at least one" and indefinite articles such as "a" or "an." The same holds true for the use of definite articles. Unless stated otherwise, terms such as "first" and "second" are used to arbitrarily distinguish between the elements such terms describe. Thus, these terms are not necessarily intended to indicate temporal or other prioritization of such elements.

## Claims

1. A self-configurable modulator that reconfigures a plurality of pulse width modulation (PWM) drive signals provided to a cascaded multilevel converter in response to fault information, wherein the cascaded multilevel converter comprises a plurality of phases each comprising a plurality of submodules and wherein the fault information indicates failure of any of the plurality of submodules of the cascaded multilevel converter, the self-configurable modulator comprising:

   a reference voltage limiter configured to limit amplitudes of a plurality of reference voltages based on the fault information;
   a zero-sequence voltage adjuster configured to calculate at least one zero-sequence voltage from the fault information, and to add the at least one zero-sequence voltage to each one of a plurality of modulating signals generated for a plurality of phases to provide a plurality of adjusted modulating signals; and
   a carrier signal comparator configured to realign a plurality of carrier signals based on the fault information and to compare a plurality of realigned carrier signals with the plurality of adjusted modulating signals to provide a plurality of reconfigured PWM drive signals.

2. The self-configurable modulator of claim 1, wherein the reference voltage limiter is configured to eliminate phase state combinations and to eliminate corresponding vector points indicative of unachievable converter states based on the fault information, and to select a set of remaining phase state combinations that maximizes the modulation index for the limited configuration as a result of failure of at the least one submodule.

3. The self-configurable modulator of any of claims 1 to 2, wherein the reference voltage limiter is configured to determine a fault type based on the fault information, to use the determined fault type to retrieve a corresponding maximal modulation index from a memory that lists a plurality of maximum modulation indices for a plurality of fault types, and to use the retrieved maximal modulation index to limit the amplitudes of the reference voltages.

4. The self-configurable modulator of any of claims 1 to 3, wherein each zero-sequence voltage comprises the sum of the inverse voltage components for each voltage component that can no longer be synthesized by a corresponding phase of the cascaded multilevel converter having at least one failed submodule.

5. The self-configurable modulator of any of claims 1 to 4, wherein the zero-sequence voltage adjuster is configured to calculate a zero-sequence voltage for each phase of the cascaded multilevel converter having at least one failed submodule, to add calculated zero-sequence voltages together to determine a combined zero-sequence voltage, and to add the combined zero-sequence voltage to each modulating signal to provide a corresponding adjusted modulating signal.

6. The self-configurable modulator of any of claims 1 to 5, wherein the carrier signal comparator is configured to bypass each failed submodule of a compromised phase by driving corresponding submodule switches to a predetermined logic state, to determine an adjusted angle difference between carrier signals of remaining submodules of the compromised phase, and to determine an adjusted set of carrier signals for the remaining submodules of the compromised phase.

7. The self-configurable modulator of claim 6, wherein the carrier signal comparator is further configured to attenuate amplitudes of the adjusted set of carrier signals.

8. The self-configurable modulator of any of claims 1 to 7, wherein the carrier signal comparator comprises:

   a plurality of drive circuits for each of the plurality of phases, wherein each drive circuit comprises a plurality of comparators configured to compare a modulating signal or an adjusted modulating signal with a plurality of carrier signals for generating a corresponding one of a plurality of sets of PWM signals; and
   a PWM controller configured to bypass each failed submodule of each compromised phase by driving corresponding submodule switches to a predetermined logic state, and to select from among the plurality of sets of PWM signals and to redirect selected sets of PWM signals to operating submodules of each compromised phase.

9. The self-configurable modulator of any of claims 1 to 8, further comprising a sampling and normalization module that discretizes received reference voltages based on a sampling frequency and that remaps amplitudes of the reference voltages by multiplying each reference voltage by a predetermined gain to provide a plurality of discretized and amplified reference voltages to the reference voltage limiter.

10. The self-configurable modulator of any of claims 1 to 9, further comprising a multilevel space vector PWM converter configured to calculate a zero-sequence voltage according to SV-PWM operation and to add the calculated zero-sequence voltage to a plurality of amplitude limited reference voltages from the reference voltage limiter for operational submodules of each of the plurality of phases to provide the plurality of modulating signals to the zero-sequence voltage adjuster.

11. A method of reconfiguring a plurality of pulse width modulation (PWM) drive signals provided to a cascaded multilevel converter in response to fault information, wherein the cascaded multilevel converter comprises a plurality of phases each comprising a plurality of submodules and wherein the fault information indicates failure of any of the plurality of submodules of the cascaded multilevel converter, the method comprising:

   limiting amplitudes of a plurality of reference voltages based on the fault information;
   calculating at least one zero-sequence voltage from the fault information, and adding the at least one zero-sequence voltage to each one of a plurality of modulating signals generated for a plurality of phases to provide a plurality of adjusted modulating signals; and
   realigning a plurality of carrier signals based on the fault information and comparing a plurality of realigned carrier signals with the plurality of adjusted modulating signals to provide a plurality of reconfigured PWM drive signals.

12. The method of claim 11, wherein the limiting amplitudes of a plurality of reference voltages comprises:

   eliminating phase state combinations and corresponding vector points indicative of unachievable converter states based on the fault information; and
   selecting a set of remaining phase state combinations that maximizes the modulation index for the limited configuration as a result of failure of any of the plurality of submodules.

13. The method of claim 11 or 12, wherein the limiting amplitudes of a plurality of reference voltages comprises:

   determining a fault type based on the fault information;
   using the determined fault type to retrieve a corresponding maximal modulation index from a memory that lists a plurality of maximum modulation indices for a plurality of fault types; and using the retrieved maximal modulation index to limit the amplitudes of the reference voltages.

14. The method of any of claims 11 to 13, wherein the calculating at least one zero-sequence voltage comprises summing inverse voltage components for each voltage component that can no longer be synthesized by a corresponding phase of the cascaded multilevel converter having at least one failed submodule.

15. The method of any claim 11 to 14, wherein the calculating at least one zero-sequence voltage comprises:

     calculating a zero-sequence voltage for each phase of the cascaded multilevel converter having at least one failed submodule;
     adding calculated zero-sequence voltages together to determine a combined zero-sequence voltage; and
     adding the combined zero-sequence voltage to each modulating signal to provide a corresponding adjusted modulating signal.

FIG. 1

214 — CASCADED ACTIVE NEUTRAL POINT CLAMPED (CANPC)

212 — CASCADED CROSS-SWITCHED (CCS)

210 — CASCADED FULL-BRIDGE (CHB)

204 — CASCADED MULTILEVEL CONVERTER WITH N=3 SUBMODULES PER PHASE

NEUTRAL POINT

VDC

A    B    C

a    b    c

122 — FAULT DETECTOR → FC

NUMBER OF LEVELS FOR CHB TYPE CONVERTERS = L = 2N + 1

FOR N SUBMODULES, RECONFIGURATION CAN BE ACHIEVED FOR UP TO 3N-2 TOTAL SUBMODULE FAILURES.

EX: FOR N=3, CAN HAVE UP TO 7 FAILURES

FIG. 2

FIG.3

VDC

a     b     c    402

A   GOOD GOOD    B   GOOD GOOD    C   GOOD GOOD

406    404

$$\begin{bmatrix} A2 & B2 & C2 \end{bmatrix}$$
$$\begin{matrix} +2 & +2 & +2 \\ +1 & +1 & +1 \\ 0 & 0 & 0 \\ -1 & -1 & -1 \\ -2 & -2 & -2 \end{matrix}$$

$$V_{ref_{max1}} = \frac{E}{\sqrt{3}}$$
(100%)

FIG. 4

$$\begin{bmatrix} A2 & B1 & C1 \end{bmatrix}$$
$$+2 \quad +2$$
$$+1 \quad +1 \quad +1$$
$$0 \quad \;\;0 \quad \;\;0$$
$$-1 \quad -1 \quad -1$$
$$-2 \quad -2$$

$$V_{ref\,max2} = \frac{3}{4} \times \frac{E}{\sqrt{3}}$$
$$(75\%)$$

FIG. 5

$$[A2 \quad B2 \quad C0]$$

$$\begin{matrix} +2 & +2 & \\ +1 & +1 & \\ 0 & 0 & 0 \\ -1 & -1 & \\ -2 & -2 & \end{matrix}$$

$$V_{refmax3} = \frac{2}{4} \times \frac{E}{\sqrt{3}}$$

$$(50\%)$$

FIG. 6

$$\begin{bmatrix} A2 & B1 & C0 \end{bmatrix}$$

+2
+1  +1
 0   0   0
−1  −1
−2

$$V_{refmax4} = \frac{1}{4} \times \frac{E}{\sqrt{3}}$$

(25%)

FIG. 7

| FAULT CASE # | PHASE A VAILD SUB-MODULES | PHASE B VAILD SUB-MODULES | PHASE C VAILD SUB-MODULES | NUMBER OF A FAILURES | NUMBER OF B FAILURES | NUMBER OF C FAILURES | TOTAL FAILURES | MMI |
|---|---|---|---|---|---|---|---|---|
| 0 | A2 | B2 | C2 | 0 | 0 | 0 | 0 | 1.0 |
| 1 | A2 | B2 | C1 | 0 | 0 | 1 | 1 | 0.75 |
| 2 | A2 | B2 | C0 | 0 | 0 | 2 | 2 | 0.50 |
| 3 | A2 | B1 | C0 | 0 | 1 | 2 | 2 | 0.25 |
| 4 | A1 | B1 | C0 | 1 | 1 | 2 | 4 | 0.25 |
| 5 | A1 | B2 | C2 | 1 | 0 | 0 | 1 | 0.75 |
| 6 | A1 | B1 | C2 | 1 | 1 | 0 | 2 | 0.50 |
| 7 | A1 | B1 | C1 | 1 | 1 | 1 | 3 | 0.50 |
| 8 | A1 | B0 | C0 | 1 | 2 | 2 | 5 | 0.0 |
| 9 | A0 | B2 | C0 | 2 | 0 | 2 | 4 | 0.0 |

800

FIG.8

FIG. 9

FIG. 10

EP 4 415 240 A2

MODIFIED NORMALISED VOLTAGES REFERENCES

INJECTED HOMOPOLAR

FIG. 11

FIG. 12

FIG. 13

FIG. 14

FIG. 15

1504 ── 0 ──● ──────────────→ HG_2X
1308 ──●──→ NOT ──→ BG_2X
1503 ── 1 ──● ──────────────→ BD_2X
1307 ──●──→ NOT ──→ HD_2X
1402 ── 0 ──● ──────────────→ HG_1X
1306 ──●──→ NOT ──→ BG_1X
1401 ── 1 ──● ──────────────→ BD_1X
1305 ──●──→ NOT ──→ HD_1X

1600

FIG. 16

FIG. 17